(19) Europäisches Patentamt
European Patent Office
Office européen des brevets

(11) EP 4 235 833 B1

(12) # EUROPEAN PATENT SPECIFICATION

(45) Date of publication and mention of the grant of the patent:
**03.06.2026 Bulletin 2026/23**

(21) Application number: **23158482.2**

(22) Date of filing: **24.02.2023**

(51) International Patent Classification (IPC):
***H01M 4/04*** (2006.01) ***H01M 4/131*** (2010.01)
***H01M 4/1391*** (2010.01) ***H01M 4/525*** (2010.01)
***H01M 4/62*** (2006.01) ***H01M 10/0525*** (2010.01)

(52) Cooperative Patent Classification (CPC):
**H01M 4/0404; H01M 4/131; H01M 4/1391; H01M 4/525; H01M 4/62; H01M 10/0525;**
Y02E 60/10

(54) **LIQUID COMPOSITION, LIQUID COMPOSITION FOR INKJET DISCHARGING, DEVICE FOR MANUFACTURING LAYER CONTAINING INORGANIC OXIDE, METHOD OF MANUFACTURING LAYER CONTAINING INORGANIC OXIDE, AND ELECTROCHEMICAL DEVICE**

FLÜSSIGE ZUSAMMENSETZUNG, FLÜSSIGE ZUSAMMENSETZUNG ZUR TINTENSTRAHLENTLADUNG, VORRICHTUNG ZUR HERSTELLUNG EINER SCHICHT MIT ANORGANISCHEM OXID UND ELEKTROCHEMISCHE VORRICHTUNG

COMPOSITION LIQUIDE, COMPOSITION LIQUIDE POUR DÉCHARGE PAR JET D'ENCRE, DISPOSITIF DE FABRICATION DE COUCHE CONTENANT UN OXYDE INORGANIQUE, PROCÉDÉ DE FABRICATION DE COUCHE CONTENANT UN OXYDE INORGANIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.02.2022 JP 2022029426**

(43) Date of publication of application:
**30.08.2023 Bulletin 2023/35**

(73) Proprietor: **Ricoh Company, Ltd.**
**Tokyo 143-8555 (JP)**

(72) Inventors:
- **OHYA, Kayato**
  **Tokyo, 143-8555 (JP)**
- **HIGASHI, Ryuji**
  **Tokyo, 143-8555 (JP)**
- **SAGISAKA, Toshiya**
  **Tokyo, 143-8555 (JP)**
- **NOGUCHI, Soh**
  **Tokyo, 143-8555 (JP)**
- **ITOH, Yoshio**
  **Tokyo, 143-8555 (JP)**
- **KAJITA, Tomomasa**
  **Tokyo, 143-8555 (JP)**
- **NAKAJIMA, Satoshi**
  **Tokyo, 143-8555 (JP)**
- **KURIYAMA, Hiromichi**
  **Tokyo, 143-8555 (JP)**
- **TAKEUCHI, Shigeo**
  **Tokyo, 143-8555 (JP)**

(74) Representative: **Marks & Clerk LLP**
**15 Fetter Lane**
**London EC4A 1BW (GB)**

(56) References cited:
**WO-A1-2018/164076**
**TW-A- 201 407 794**
**TW-B- I 624 983**
**US-A1- 2020 235 375**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 235 833 B1

## Description

BACKGROUND

Technical Field

The present disclosure relates to a liquid composition, a liquid composition for inkjet discharging, a device for manufacturing a layer containing an inorganic oxide, and a method of manufacturing a layer containing an inorganic oxide, for an electrochemical device.

Description of the Related Art

Electrochemical devices, such as lithium ion secondary batteries, are mounted on portable devices, hybrid vehicles, and electric vehicles, and the demand for such a device is increasing. The need for wearable devices and medical patches carrying thin batteries is increasing, diversifying demand for lithium ion secondary batteries.

Liquid compositions for electrode mixture layers generally contain active materials, dispersion media, and binders. A polymer is used as the binder and a liquid composition with a high solid content is prepared to achieve high productivity. Therefore, liquid compositions for electrode mixture layers are generally slurry having an extremely high viscosity of from $10^3$ to $10^4$ mPa·s. Electrodes constituting lithium ion secondary batteries are thus typically manufactured by applying a liquid composition for an electrode mixture layer to an electrode substrate using a die coater, a comma coater, or a reverse roll coater to form an electrode mixture layer on the substrate.

On the other hand, a method of manufacturing such a secondary battery, including applying a liquid composition for an electrode mixture layer using inkjet printing, which readily executes an intermittent application, is appealing to reduce the material cost and the load on the environment. However, inkjet printing is generally suitable for applying a liquid composition with a low viscosity. Such a liquid composition has an upper viscosity limit of 200 mPa·s even if the composition is of a high viscosity type, which is just a viscosity level at a factor of from 1:10 to 1:100 of a typical slurry liquid composition for an electrode mixture layer.

As a liquid composition for an electrode mixture layer with a low viscosity, a liquid composition for an electrode mixture layer for inkjet printing having a viscosity of from 3.1 to 5.8 mPa·s has been proposed in Examples of Japanese Unexamined Patent Application Publication No.2009-152180. The liquid composition contains a binder with a viscosity of from 1 to 20 mPa·s in an aqueous solution at 1 percent by mass. The proportion of the binder is from 0.01 to 0.5 percent by mass in the liquid composition.

As a liquid composition for an electrode mixture layer with a high solid content, a slurry composition for an electrode mixture having a solid content as high as 75 percent by mass or greater has been proposed in WO2019/044452. The slurry composition is prepared using a binder composition for a non-aqueous secondary battery electrode with a viscosity of 10,000 mPa·s or less at a shearing speed of 0.1 $s^{-1}$ for a mixture obtained by mixing a polymer A at a concentration of 8 percent by mass and the organic solvent mentioned above. The binder contains the polymer A, and the polymer A has an ethylenic unsaturated acid monomer unit of from 1.00 to 10.00 percent by mass.

TW I624983 B discloses a liquid composition for a lithium-ion secondary battery, comprising cerium oxide and ethyl decanoate. TW 201407794 A discloses a liquid composition comprising silicon dioxide and ethyldecanoate.

SUMMARY

According to embodiments of the present disclosure, an improved liquid composition containing an inorganic oxide is provided which demonstrates an excellent dispersibility of the inorganic oxide and strikes a balance between a high solid content and a low viscosity.

The present invention is as set out in the appended claims.

According to an aspect of the present invention, a liquid composition is provided which contains an inorganic oxide, wherein the inorganic oxide is a positive electrode active material or a negative electrode active material, and an organic solvent represented by the following Chemical Formula 1,

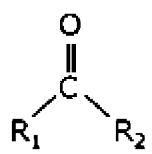

Chemical Formula 1

where $R_1$ and $R_2$ each, independently represent straight or branched chain alkyl groups or straight or branched chain alkoxy groups and at least one of $R_1$ and $R_2$ represents a branched chain alkyl group or a branched chain alkoxy group, wherein the organic solvent is selected from 3-methyl-2-butanone, 3-methyl-2-pentanone, 3-ethyl-2-pentanone, 2-methyl-3-pentanone, 2, 4-dimethyl-3-pentanone, 3-methyl-2-hexanone, 3-ethyl-2-hexanone, 3-propyl-2-hexanone, 4-methyl-2-pentanone, 4-methyl-2-hexanone, 5-methyl-2-hexanone, 2-methyl-3-hexanone, 3-methyl-2-heptanone, 4-methyl-2-heptanone, 5-methyl-2-heptanone, 6-methyl-2-heptanone, 2-methyl-3-heptanone, 2-methyl-4-heptanone, 3-methyl-2-octanone, 4-methyl-2-octanone, 5-methyl-2-octanone, 6-methyl-2-octanone, 7-methyl-2-octanone, isopropylacetate, isobutylacetate, isoamylacetate, t-butylacetate, 2-ethylhexylacetate, ethylpivalate, isopropylpropionate, isobutylpropionate, isoamylpropionate, t-butylpropionate, isopropylbutyrate, isobutylbutyrate, isopropylisobutyrate, butylisobutyrate, isobutylisobutyrate, pentylisobutyrate, isoamylisobutyrate, methyl-2-ethylbutyrate, ethyl-2-ethylbutyrate, ethyl-t-butylacetate, isopropylvalerate, isobutylvalerate, isoamylvalerate, methylisovalerate, ethylisovalerate, propylisovalerate, isopropylisovalerate, butylisovalerate, isobutylisovalerate, propylisovalerate, isoamylisovalerate, and ethyl-DL-2-methylbutyrate.

As another aspect, a liquid composition for inkjet discharging is provided which contains the liquid composition mentioned above.

As another aspect, a container (1b) containing the liquid composition mentioned above or the liquid composition for inkjet discharging containing the liquid composition mentioned above is provided.

As another aspect, a device (300;200;300') for manufacturing an inorganic oxide-containing layer is provided which includes the container (1b) mentioned above and a discharging device (10) including an inkjet head (306) for discharging the liquid composition in the container (1b) to a current collector.

As another aspect, a method of manufacturing an inorganic oxide-containing layer is provided which includes discharging the liquid composition mentioned above or the liquid composition for inkjet discharging containing the liquid composition mentioned above using an inkjet head.

An electrochemical device (1) is disclosed which includes a current collector (11;11B;21) and a layer (12;12B;22) disposed on the current collector (11;11B:21), the layer (12:12B;22) containing an inorganic oxide, wherein the inorganic oxide is a positive electrode active material or a negative electrode active material, and an organic solvent, wherein the organic solvent is as mentioned above,
wherein a proportion of the organic solvent in the layer is from 1 to 100 ppm.

## BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating an example of the method of manufacturing a layer containing an inorganic oxide according to an embodiment of the present invention;
FIG. 2 is a schematic diagram illustrating an example of the device for manufacturing a layer containing an inorganic oxide according to an embodiment of the present invention;
FIG. 3 is a schematic diagram illustrating another example of the device for manufacturing a layer containing an inorganic oxide according to an embodiment of the present invention;
FIG. 4 is a schematic diagram illustrating an example of the method of manufacturing an electrode according to an embodiment of the present invention;
FIG. 5 is a schematic diagram illustrating an example of the variations of a liquid discharging device;
FIG. 6 is a diagram illustrating a cross-sectional view of an example of a negative electrode;
FIG. 7 is a diagram illustrating a cross-sectional view of an example of a positive electrode;
FIG. 8 is a diagram illustrating an example of an electrode device for use in an electrochemical device; and
FIG. 9 is a schematic diagram illustrating a cross-sectional view of the electrochemical device.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

## DESCRIPTION OF THE EMBODIMENTS

The terminology used herein is for the purpose of describing particular embodiments only and is not intended to

be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

## Liquid Composition

The liquid composition of the present disclosure contains at least an inorganic oxide and an organic solvent and other optional components. The liquid composition of the present disclosure contains a first aspect and a second aspect depending on the aspect of the organic solvent.

A liquid composition for an electrode mixture layer for inkjet printing has been proposed in Japanese Unexamined Patent Application Publication No. 2009-152180. The liquid composition's productivity is relatively low compared to a typical slurry liquid composition for electrode mixture, considering that the liquid composition has a solid content of only 20 to 40 percent by mass while the slurry liquid composition has a solid content of from 60 to 70 percent by mass.

The slurry composition for an electrode mixture proposed in WO2019/044452 is required to dilute to a solid content lower than that of the typical slurry liquid composition mentioned above in order to use the slurry composition for inkjet printing.

The inventors of the present invention have confirmed that a liquid composition for an electrode mixture has a sharp rise in viscosity at a solid content surpassing about 60 percent by mass even when the liquid composition contains a dispersant having a large proportion for imparting good dispersibility to an active material. Moreover, the output/input characteristics of a secondary battery using a liquid composition for an electrode mixture are confirmed to deteriorate significantly compared to a secondary battery using a slurry liquid composition free of a dispersant. The dispersant is adsorbed to the surface of an active material, which inferentially serves to inhibit electron conduction and ion conduction. This mechanism explains why this degradation occurs.

Therefore, more improvements are required to obtain a liquid composition that achieves an excellent dispersibility of inorganic oxide and strikes a balance between a high solid content and a low viscosity.

The dispersibility of the inorganic oxide in the liquid composition of the present disclosure is evaluated by a median diameter $D_{50}$ of the inorganic oxide in the liquid composition. The method of measuring the median diameter $D_{50}$ is not particularly limited and can be suitably selected to suit to a particular application. One way of measuring is according to the ISO 13320:2009 regulation. The device for this measuring is not particularly limited and can be suitably selected to suit to a particular application. It includes a particle size analyzer utilizing laser diffraction, Mastersizer 3000, manufactured by Malvern Panalytical Ltd.

In the present specification, viscosity means a steady flow shearing viscosity at a rate of rotation of 50 rpm (rotation per minute) at 25 degrees C. The method of measuring the viscosity of the liquid composition mentioned above is not particularly limited and can be suitably selected to suit to a particular application. One way of measuring is according to the JIS Z 8803 format. The device for this measuring is not particularly limited and can be suitably selected to suit to a particular application. It includes a TV25 type viscometer, cone and plate viscometer, manufactured by TOKI SANGYO CO., LTD.

In the present specification, the solid content of a liquid composition means the mass percentage of the mass of the components other than the organic solvent to the entire mass of the liquid composition.

## Organic Solvent

The organic solvent in the present disclosure means a component that disperses the inorganic oxide in the liquid composition. The organic solvent has a boiling point under a fixed pressure and evaporates during a particular drying process. In this regard, the organic solvent is clearly distinguishable from an involatile liquid dispersant with a thermal degradability.

Organic Solvent in Liquid Composition of First Aspect

The organic solvent in the liquid composition of the first aspect is represented by the following Chemical Formula 1 and has a topological index chai4v of 0.9 or greater.

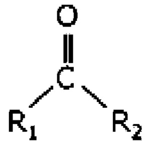

Chemical Formula 1

In the Chemical Formula 1, $R_1$ and $R_2$ each, independently represent straight chain alkyl groups or straight chain alkoxy groups.

Organic Solvent in Liquid Composition of Second Aspect

The organic solvent in the liquid composition of the second aspect is represented by the following Chemical Formula 1 and has a topological index chai4v of 0.3 or greater.

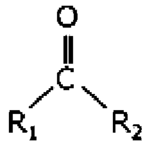

Chemical Formula 1

In the Chemical formula 1, $R_1$ and $R_2$ each, independently represent straight or branched chain alkyl groups or straight or branched chain alkoxy groups and at least one of $R_1$ and $R_2$ represents a branched chain alkyl group or a branched chain alkoxy group.

The inorganic oxide mentioned above is well dispersed in the organic solvent mentioned above, which strikes a balance between a high solid content and a low viscosity of the liquid composition. This mechanism is not clear, but the surface of an inorganic oxide adsorbs the carbonyl oxygen in an organic solvent, and the alkyl group and/or the alkoxy group inferentially acts as a dispersing group, which explains why the dispersibility of the inorganic oxide is enhanced as if a typical dispersant was used.

A general-purpose dispersant has adsorption groups in a molecule of the dispersant. If an adsorption group is detached from the surface of an inorganic oxide, the rest normally remains on the surface. Such a typical dispersant has a highly extended dispersion group, which causes strong steric and electrostatic repulsion between the dispersion groups in each molecule of the dispersant. This repulsion is known to demonstrate the dispersion effect.

Conversely, the organic solvent in the present disclosure has a single adsorption group and a concise dispersion group in comparison with that of a typical dispersant. However, considering its usage purpose, the organic solvent is present around an inorganic oxide in an extremely high concentration manner. If the adsorption group is detached, another molecule of the organic solvent is inferred to immediately adsorb the separate group, which leads to a demonstration of good dispersion. Considering the properties mentioned above, an organic solvent's molecular weight is minimal compared to that of a typical dispersant. The organic solvent has a high vapor pressure and can be readily purged during a particular drying process. This characteristic helps an inorganic oxide to demonstrate its original performance in an electrochemical device in which the function of the surface of an inorganic oxide including catalyst activity, electron conductivity, and ion conductivity particularly plays a significant role in the final phase.

The organic solvent in the liquid composition of the first aspect has a topological index chai4v of 0.9 or greater, and in the Chemical Formula 1 of the organic solvent, $R_1$ and $R_2$ each, independently represent straight chain alkyl groups or straight chain alkoxy groups.

Chai index means a topological index in the number of dimensions of 2, which is a parameter calculated with a weight on the characteristics of the structure of a molecule as an indicator representing the size of the molecule (Reviews in Computational Chemistry, Vol2, Edited by Kenny B. Lipkowitz & Donald B. Boydiews). "4" in chai4v means four atoms, and "v" therein means van der Walls volume.

The median diameter $D_{50}$ of the inorganic oxide in a liquid composition has a relationship of the logistics curve

with chai4v, and the dispersibility of the inorganic oxide in the liquid composition significantly ameliorates when chai4v is 0.9 or greater. In this range, a straight chain alkyl group or a straight chain alkoxy group acting as a dispersion group becomes long, which inferentially enhances the dispersion ability.

Chai4v in the present disclosure is a value calculated as an invariant to the molecule graph when a compound is taken as a graph structure from the SMILS file or sdf file of the structure of the compound. The value of chai4v in the present disclosure can be obtained by a free or procured index calculation software such as RDKit, Dragon, and modred.

The organic solvent in the liquid composition of the second aspect has a topological index chai4v of 0.3 or greater and in the Chemical Formula 1 of the organic solvent, $R_1$ and $R_2$ each, independently represent straight or branched chain alkyl groups or straight or branched chain alkoxy groups and at least one of $R_1$ and $R_2$ represents a branched chain alkyl group or a branched chain alkoxy group.

The branched chain group enhances the dispersibility of the inorganic oxide in a liquid composition more than the straight chain group. A branched chain alkyl group and/or a branched chain alkoxy group acting as a dispersion group has a steric effect, inferentially further enhancing the dispersion ability. In addition, as in the case of the straight chain group, the median diameter $D_{50}$ of the inorganic oxide in a liquid composition has a relationship of the logistics curve with chai4v, and the inorganic oxide in the liquid composition significantly ameliorates when chai4v is 0.3 or greater.

The topological index chai4v of the organic solvent in the liquid composition of the second aspect is not particularly limited and can be suitably selected to suit to a particular application as long as the index is 0.3 or greater. It is preferably 0.4 or greater and more preferably 0.5 or greater.

For the organic solvent in the liquid composition of the second aspect, it is preferable that, in the Chemical Formula 1, $R_1$ be a branched chain alkyl group and $R_2$ be a straight or branched chain alkoxy group, and more preferable that $R_1$ be a branched chain alkyl group and $R_2$ be a straight chain alkoxy group. Compared to the combination of a straight chain alkyl group and a branched chain alkoxy group, it is particularly preferable that $R_1$ be a branched chain alkyl group and $R_2$ be a branched chain alkoxy group to further enhance the dispersibility of the inorganic oxide in a liquid composition.

Type of Organic Solvent

The organic solvent in the present disclosure includes a ketone-based solvent and an ester-based solvent.

Specific examples of the ketone-based solvent having a straight chain structure alone and a topological index chai4v of 0.9 or greater include, but are not limited to, 2-nonanone, 3-nonanone, 4-nonanone, 2-decanone, 3-decanone, 4-decanone, 5-decanone, 2-undecanone, 3-undecanone, 4-undecanone, 5-undecanone, and 6-undecanone.

Specific examples of the ketone-based solvent having a branched chain structure and a topological index chai4v of 0.3 or greater include, but are not limited to, 3-methyl-2-butanone, 3-methyl-2-pentanone, 3-ethyl-2-pentanone, 2-methyl-3-pentanone, 2, 4-dimethyl-3-pentanone, 3-methyl-2-hexanone, 3-ethyl-2-hexanone, 3-propyl-2-hexanone, 4-methyl-2-hexanone, 4-methyl-2-pentanone, 5-methyl-2-hexanone, 2-methyl-3-hexanone, 3-methyl-2-heptanone, 4-methyl-2-heptanone, 5-methyl-2-heptanone, 6-methyl-2-heptanone, 2-methyl-3-heptanone, 2-methyl-4-heptanone, 3-methyl-2-octanone, 4-methyl-2-octanone, 5-methyl-2-octanone, 6-methyl-2-octanone, and 7-methyl-2-octanone.

Specific examples of the ester-based solvent having a straight chain structure alone and a topological index chai4v of 0.9 or greater include, but are not limited to, heptylacetate, octylacetate, nonylacetate, decylacetate, heptylpropionate, octylpropionate, nonylpropionate, heptylbutyrate, octylvalerate, pentylvalerate, hexylvalerate, heptylvalerate, butylhexanoate, pentylhexanoate, hexylhexanoate, ethylheptanoate, propylheptanoate, butylheptanoate, pentylheptanoate, methyloctanoate, ethyloctanoate, propyloctanoate, butyloctanoate, methylnonanoate, ethylnonanoate, propylnonanoate, methylnonanoate, ethylnonanoate, propylnonanoate, methyldecanoate, and ethyldecanoate.

Specific examples of the ester-based solvent having a branched chain structure and a topological index chai4v of 0.3 or greater include, but are not limited to, isopropylacetate, isobutylacetate, isoamylacetate, t-butylacetate, 2-ethylhexylacetate, ethylpivalate, isopropylpropionate, isobutylpropionate, isoamylpropionate, t-butylpropionate, isopropylbutyrate, isobutylbutyrate, isopropylisobutyrate, butylisobutyrate, isobutylisobutyrate, pentylisobutyrate, isoamylisobutyrate, methyl-2-ethylbutyrate, ethyl-2-ethylbutyrate, ethyl-t-butylacetate, isopropylvalerate, isobutylvalerate, isoamylvalerate, methylisovalerate, ethylisovalerate, propylisovalerate, isopropylisovalerate, butylisovalerate, isobutylisovalerate, propylisovalerate, isoamylisovalerate, and ethyl-DL-2-methylbutyrate.

Inorganic Oxide

The inorganic oxide is a positive electrode active material or a negative electrode active material and can be suitably selected to suit to a particular application. These may be used alone or in a combination with other inorganic oxides. Examples include, but are not limited to, insulating oxides, semiconductive oxides, conductive oxides, ion conductive oxides, and metal oxide catalysts. Of these, semiconductive oxides, conductive oxides, ion-conductive oxides, and metal oxide catalysts are preferable, which do not impair the function of the surface of an inorganic oxide. Examples of the ion conductive oxide include, but are not limited to, a positive electrode (cathode) active material, a

negative electrode (anode) active material, and a solid electrolyte, which are described later. The inorganic oxide preferably has uncoated surface.

Positive Electrode Active Material

The positive electrode active material as an inorganic oxide is not particularly limited and can be suitably selected to suit to a particular application as long as it can receive or release an alkali metal ion. One of the materials is an alkali metal-containing transition metal compound.

The alkali metal-containing transition metal compound is not particularly limited and can be suitably selected to suit to a particular application. It includes a lithium-containing transition metal compound such as a composite oxide containing lithium and one or more elements selected from the group consisting of cobalt, manganese, nickel, chromium, iron, and vanadium

Specific examples of the lithium-containing transition metal compound include, but are not limited to, positive electrode active materials such as a lithium-containing cobalt oxide ($LiCoO_2$), lithium manganate ($LiMn_2O_4$), a lithium-containing nickel oxide ($LiNiO_2$), a lithium-containing composite oxide of Co-Ni-Mn (Li $(CoMnNi)O_2$), a lithium-containing composite oxide of Ni-Mn-Al, a lithium-containing composite oxide of Ni-Co-Al, an olivine-type lithium iron-phosphate ($LiFePO_4$), an olivine-type lithium manganese-phosphate ($LiMnPO_4$), a $Li_2MnO_3$-$LiNiO_2$ based solid solution, a lithium-excess spinel compound represented by $Li_1 +_xMn_{2-x}O_4$ (0 < X <2), $Li[Ni_{0.17}Li_{0.2}CO_{0.07}Mn_{0.56}]O_2$, and $LiNi_{0\ 5}Mn_{15}O_4$.

Negative Electrode Active Material

The negative electrode active material as an inorganic oxide is not particularly limited and can be suitably selected to suit to a particular application as long as it can receive or release an alkali metal ion. It includes, but is not limited to, lithium titanate, titanium oxide, silicon oxide, and tin oxide.

Solid Electrolyte

A solid electrolyte as an inorganic oxide contains an oxygen atom (O) with ion conductivity of a metal belonging to Group 1 or 2 of the periodic table and electron insulating properties.

Specific examples of the solid electrolyte include, but are not limited to, $Li_{xa}La_{ya}TiO_3$ [xa = 0.3 to 0.7, ya = 0.3 to 0.7] (LLT), $Li_{xb}La_{yb}Zr_{zb}Mbb_{mb}O_{nb}$ (Mbb is at least one element selected from the group consisting of Al, Mg, Ca, Sr, V, Nb, Ta, Ti, Ge, In, and Sn, where xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$, $Li_{xc}B_{yc}Mcc_{zc}O_{nc}$, where Mcc is at least one element selected from the group consisting of C, S, Al, Si, Ga, Ge, In, and Sn, xc satisfies $0 \leq xc \leq 5$, yc satisfies $0 \leq yc \leq 1$, zc satisfies $0 \leq zc \leq 1$, and nc satisfies $0 \leq nc \leq 6$, $Li_{xd}$ (Al, Ga)$_{yd}$ (Ti, Ge)$_{zd}Si_{ad}P_{md}O_{nd}$, where sd satisfies $1 \leq xd \leq 3$, yd satisfies $0 \leq yd \leq 1$, zd satisfies $0 \leq zd \leq 2$, ad satisfies $0 \leq ad \leq 1$, md satisfies $1 \leq md \leq 7$, nd satisfies $3 \leq nd \leq 13$, Li(3-2xe) $Mee_{xe}$DeeO, where xe represents a number of from 0 to 0.1, and Mee represents a divalent metallic atom, and Dee represents a halogen atom or a combination of two or more halogen atoms, $Li_{xf}Si_{yf}O_{zf}$, where xf satisfies $1 \leq xf \leq 5$, yf satisfies $0 \leq yf \leq 3$, zf satisfies $1 \leq zf \leq 10$, $Li_{xg}S_{yg}O_{zg}$, where $1 \leq xg \leq 3$, yg satisfies $0 \leq yg \leq 2$, zg satisfies $1 \leq zg \leq 10$, $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO(_{4-3/2w})$ Nw, where w <1, $Li_{3.5}Zn_{0.25}GeO_4$ having a LISICON (lithium super ionic conductor) type crystal structure, $La_{0.55}Li_{0.35}TiO_3$ having a perovskite type crystal structure, $LiTi_2P_3O_{12}$ having NASICON (Natrium super ionic conductor) type crystal structure, $Li_{1+gb+yh}(Al,Ga)_{xh}(Ti,Ge)_{2-xh}Si_{yh}P_{3-yh}O_{12}$, where xh satisfies $0 \leq xh \leq 1$ and yh satisfies $0 \leq yh \leq 1$, and $Li_7La_3Zr_2O_{12}$ (LLZ) having a garnet type crystal structure.

Phosphorus compounds containing Li, P, and O are also preferable. Specific examples include, but are not limited to, lithium phosphate ($Li_3PO_4$), LiPON obtained by partially substituting oxygens of lithium phosphate with nitrogens, and LiPOD 1, where D1 represents at least one of Ti, V, Cr, Mn, Fe, Co, Ni, Cu, Zr, Nb, Mo, Ru, Ag, Ta, W, Pt, and Au.

$LiA^1ON$, where $A^1$ is at least one of Si, B, Ge, Al, C, and Ga, can also be preferably used.

Maximum Particle Diameter of Inorganic Oxide

The maximum particle diameter of the inorganic oxide in the present disclosure is not particularly limited and can be suitably selected to suit to a particular application unless it impairs the effects of the present disclosure. The maximum particle diameter is preferably smaller than the nozzle diameter of an inkjet head and is preferably sufficiently smaller than the nozzle diameter of the inkjet head to enhance the inkjet dischargability. The ratio of the maximum particle diameter of the inorganic oxide contained in a liquid composition to the nozzle diameter of an inkjet head is preferably 0.8 or less, more preferably 0.6 or less, and furthermore preferably 0.5 or less. The discharging stability of a liquid composition ameliorates when the maximum particle diameter is within this range. For example, in the case of a droplet observing device (EV1000,

manufactured by Ricoh Company, Ltd.), the nozzle diameter is 40 μm so that the maximum particle diameter of the inorganic oxide contained in a liquid composition is preferably 32 μm or less, more preferably 24 μm or less, and furthermore preferably 20 μm or less. The maximum particle diameter represents the diameter of the maximum distribution value in the particle size distribution of the inorganic oxide in the liquid composition measured. The maximum particle diameter can be measured using a particle size distribution in the same manner as in the above-described method for evaluating the dispersibility of the inorganic oxide.

Modal diameter of Inorganic Oxide

The modal diameter of the inorganic oxide in the present disclosure is not particularly limited and can be suitably selected to suit to a particular application unless it has an adverse impact on the effects of the present disclosure. It is preferably from 0.5 to 10 μm and more preferably from 3 to 10 μm or less. Defective discharging using an inorganic oxide having a modal diameter of from 0.5 to 10 μm is unlikely to occur when a liquid composition is discharged by a liquid discharging method. The modal diameter represents the diameter of the local maximum distribution value in the particle size distribution of the inorganic oxide in the liquid composition measured. The modal diameter can be measured using a particle size distribution in the same manner as in the above-described method for evaluating the dispersibility of the inorganic oxide.

Other Optional Components

The other optional components are not particularly limited and can be suitably selected to suit to a particular application unless they have an adverse impact on the effect of the present disclosure. They include, but are not limited to, active materials other than inorganic oxides, solid electrolytes other than inorganic oxides, conductive assistants, dispersants, and binders.

Active Materials Other Than Inorganic Oxide

The active material other than an inorganic oxide is not particularly limited and can be suitably selected to suit to a particular application as long as it can receive or release an alkali metal ion. One example of the negative electrode active materials is a carbon material containing graphite having a graphite crystal structure.
Specific examples include, but are not limited to, natural graphite, artificial graphite, non-graphitizable carbon (hard carbon), and graphitizable carbon (soft carbon).

Solid Electrolyte Other Than Inorganic Oxide

The solid electrolyte other than an inorganic oxide is not particularly limited and can be suitably selected to suit to a particular application as long as it has an electron insulating property, exhibits ion conductivity, and does not react with an organic solvent. A sulfide solid electrolyte is preferable to achieve a high ion conductivity. A sulfide solid electrolyte is more preferable because it has a high plasticity, thereby forming a good interface between solid electrolyte particles or between the solid electrolytes and active materials.
In the present specification, "having an electron insulating property" means a state in which a short circuit does not occur when a positive electrode and a negative electrode face each other with a solid electrolyte layer interposed therebetween and "exhibiting ion conductivity" means that ions alone move when a potential difference is applied to a positive electrode and a negative electrode facing each other with a solid electrolyte layer interposed therebetween.
Sulfide solid electrolytes can be roughly classified into crystalline sulfide solid electrolytes and glass-based solid electrolytes.
Specific examples of the crystalline sulfide solid electrolytes include, but are not limited to, $Li_{9.54}Si_{1.74}P_{1.44}S_{11.7}C_{10.3}$, $Li_{9.6}P_3S_{12}$, $Li_9P_3S_9O_3$, $Li_{9.81}Sn_{0.81}P_{2.19}S_{12}$, $Li_{9.42}Si_{1.02}P_{2.l}S_{9.96}O_{2.04}$, $Li_{10}Ge(P_{1-x}Sb_x)_2S_{12}$, where x satisfies $0 \leq x \leq 0.15$), $Li_{10}SnP_2S_{12}$, $Li_{10.35}[M1_{1-x}M2_x]_{1.35}P_{1.65}S_{12}$, where M1 and M2 each, independently represent one of Si, Ge, Sn, As, and S, x satisfies $0 \leq x \leq 0.15$, $Li_{11}Si_2PS_{12}$, $Li_{11}AlP_2S_{12}$, $Li_{3.45}Si_{0.45}P_{0.55}S_4$, $Li_6PS_5X$, where X is Cl, Br, or I, $Li_5PS_4X_2$, where X is Cl, Br, or I, $Li_{5.5}PS_{4.5}Cl_{1.5}$, $Li_{5.35}Ca_{0.1}PS_{4.5}Cl_{1.55}$, $Li_{6+x}M_xSb_{1-x}S_5I$, where M is Si, Ge, or Sn, and x satisfied $0 \leq x \leq 1$, $Li_7P_2S_8I$, $\gamma$-$Li_3PS_4$, $Li_4MS_4$, where M is Ge, Sn, or As), $Li_{4-x}Sn_{1-x}Sb_xS_4$, where x satisfies $0 \leq x \leq 0.15$, $Li_{4-x}Ge_{1-x}P_xS_4$, where x satisfies $0 \leq x \leq 0.15$, and $Li_{3+5x}P_{1-x}S_4$, where x satisfies $0 \leq x \leq 0.3$.
Specific examples of the glass-based solid electrolytes include, but are not limited to, $Li_2S$-$P_2S_5$, $Li_2S$-$P_2S_5$-LiI, $Li_2S$-$P_2S_5$-$P_2O_5$, $Li_2S$-$P_2S_5$-LiCl, $Li_2S$-$SiS_2$, $Li_2S$-$SiS_2$-$P_2S_5$, $Li_2S$-$SiS_2$-$Al_2S_3$, $Li_2S$-$SiS_2$-$Li_xMO_y$, where M is Si, P, or Ge. $Li_7P_3S_{11}$ glass ceramics, in which a glass-based sulfide solid electrolyte is partially crystallized, can also be used. The mixing ratio of each raw material of a glass-based sulfide solid electrolyte is not limited.

## Conductive Assistant

Examples of the conductive assistant include, but are not limited to, carbon black produced by a method such as a furnace method, an acetylene method, and a gasification method, and carbon materials such as carbon nanofibers, carbon nanotubes, graphene, and graphite particles. Conductive assistants other than the carbon materials include, but are not limited to, metal particles and metal fiber of aluminum. The conductive assistant may be combined with an active material in advance.

The upper limit of the mass ratio of the conductive assistant to an active material is preferably 10 percent by mass or less, more preferably 5 percent by mass or less, and furthermore preferably 3 percent by mass or less, and the lower limit is preferably 1 percent by mass or more. A mass ratio of the conductive additive to an active material satisfying the lower limit value enhances the conductivity of an obtained electrode mixture layer. A mass ratio of the conductive additive to an active material satisfying the upper limit value enhances the energy density without impairing the conductivity of an obtained electrode mixture layer.

## Dispersant

The liquid composition in the present disclosure achieves a good dispersibility of the inorganic oxide without containing a dispersant, but may optionally contain a dispersant in order to further improve the dispersion stability of the inorganic oxide or enhance the dispersibility of the components other than the inorganic oxide.

The dispersant is not particularly limited. It preferably has an ionic adsorption group in terms of dispersibility. Known dispersants and products thereof can be used. Examples include, but are not limited to, polymeric dispersants such as polyethylene-based dispersants, polyethylene oxide-based dispersants, polypropylene oxide-based dispersants, polycarboxylic acid-based dispersants, naphthalenesulfonic acid-formalin condensation-based dispersants, polyethylene glycol-based dispersants, polycarboxylic acid partial alkyl ester-based dispersants, polyether-based dispersants, and polyalkylene polyamine-based dispersants; low-molecular dispersants such as alkylsulfonic acid-based dispersants, quaternary ammonium higher alcohol alkylene oxide-based dispersants, polyhydric alcohol ester-based dispersants, and alkylpolyamine-based dispersants; and inorganic dispersants such as polyphosphate dispersants.

## Binder

The liquid composition of the present disclosure may furthermore optionally contain a binder. The binder is not particularly limited as long as it binds non-volatile components. It may be dispersed or dissolved in an organic solvent.

The amount of the binder mixed with a liquid composition is not particularly limited and can be suitably selected to suit to a particular application. The proportion is preferably from 0.1 to 10 parts to 100 parts by mass of an active material.

The binder may furthermore optionally contain other components. The binder may contain at least one of polyvinylidene fluoride (PVDF), a vinylidene fluoride-hexafluoro propylene copolymer (PVDF-HFP), polytetrafluoro ethylene (PTFE), styrene-butadiene rubber (SBR), and a polyacrylic resin.

When a liquid composition is used for inkjet discharging, the binder is preferably a polyacrylic resin to prevent nozzle clogging in a liquid discharging head because this resin is dissolved in an organic solvent and is unlikely to raise the viscosity of the liquid composition. In addition, a polyacrylic resin having a glass transition temperature of 80 degrees C or lower is preferable for a mixture layer obtained using the liquid composition to demonstrate excellent binding properties.

## Viscosity of Liquid Composition

The liquid composition mentioned above preferably has a viscosity sufficient for a liquid discharging head to be able to discharge it. Specifically, it is more preferably 200 mPa·s or less, furthermore preferably 100 mPa·s, and particularly preferably 50 mPa·s or less. In addition, it is preferably 10 mPa·s or greater and more preferably 30 mPa·s or greater. A liquid composition with a viscosity satisfying the lower limit mentioned above inhibits the flow of an applied liquid composition during drying. The film obtained is free of unevenness in thickness and locality regarding components.

## Solid Content of Liquid Composition

The solid content of the liquid composition mentioned above is preferably 60 percent by mass or greater, more preferably 65 percent by mass or greater, and furthermore preferably 70 percent by mass or greater. A liquid composition having a viscosity satisfying the upper limit mentioned above is likely to demonstrate thixotropy, which inhibits flowing of the applied liquid composition during drying so that the film obtained has a uniform thickness and is free of unevenness regarding the components.

Method of Manufacturing Liquid Composition

The liquid composition can be produced by dissolving or dispersing each of the component mentioned above in the organic solvent mentioned above.
Specifically, the liquid composition can be prepared by mixing each of the components mentioned above with the organic solvent using a mixer such as a ball mill, a sand mill, a bead mill, a pigment disperser, a grinder, an ultrasonic disperser, a homogenizer, a planetary mixer, or a filmix.
The application of the liquid composition is not particularly limited and can be suitably selected to suit to a particular application. For example, the liquid composition may be suitably used as a material for forming an inorganic oxide-containing layer such as an electrode mixture layer or a solid electrolyte layer in an electrochemical device.

Liquid Composition for Inkjet Discharging

The liquid composition of the present embodiment can be used as a liquid composition for inkjet discharging.

Electrode

The electrode relating to the present embodiment includes an electrode substrate and an electrode mixture layer formed using the liquid composition of the present embodiment.

Electrode Substrate (Current Collector)

The materials constituting an electrode substrate are not particularly limited as long as they are electroconductive and stable to a bias to be applied.
An electrode including an electrode substrate and an electrode mixture is obtained by applying a liquid composition to the electrode substrate, optionally followed by heating.

Method of Manufacturing Electrode

The method of manufacturing the electrode of the present embodiment includes applying the liquid composition of the present embodiment to an electrode substrate and other optional processes.
The method for applying the liquid composition is not particularly limited.
Specific examples include, but are not limited to, liquid discharge methods such as an inkjet method, a spray coating method, and a dispenser method, spin coating, casting, microgravure coating, gravure coating, bar coating, roll coating, wire bar coating, dip coating, slit coating, capillary coating, nozzle coating, gravure printing, screen printing, flexographic printing, offset printing, and reverse printing. Of these, the inkjet method is particularly preferable. By the inkjet method, a free-shaped electrode can be manufactured in a non-contact manner. This manufacturing method reduces the loss of the active material due to punching in the production process of an electrode.

Container

The container of the present disclosure contains the liquid composition or liquid composition for inkjet discharging of the present disclosure.
The size, shape, and structure of the container is not particularly limited and it can be suitably selected to suit to a particular application.
The method of manufacturing an inorganic oxide-containing layer by an inkjet method is described below.

Device for Manufacturing Inorganic Oxide-Containing Layer and Method of Manufacturing Inorganic Oxide-Containing Layer

The device for manufacturing an inorganic oxide-containing layer of the present disclosure includes the container of the present disclosure, a discharging device for discharging the liquid composition accommodated in the container using an inkjet head or liquid discharging head, and other optional devices.
Manufacturing an inorganic oxide-containing layer of the present disclosure includes applying the liquid composition or liquid composition for inkjet discharging of the present disclosure using an inkjet head and other optional processes.
The inorganic oxide-containing layer has a variety depending on the type of inorganic oxide to be used. Examples include, but are not limited to, an electrode mixture layer and a solid electrolyte layer.

Discharging Device and Discharging Process

The discharging device discharges the liquid composition or the liquid composition for inkjet discharging contained in the container using an inkjet head.
The discharging process executes discharging the liquid composition or the liquid composition for inkjet discharging using an inkjet head.
By this discharging, the liquid composition or the liquid composition for inkjet discharging is applied onto a target to form a liquid composition layer.
The target, also referred to as the target for discharging, is not particularly limited and can be suitably selected to suit to a particular application as long as it is a target on which an inorganic oxide-containing layer is formed. Examples include, but are not limited to, an electrode substrate, also referred to as a current collector, and an active material layer.

Other Optional Device and Other Optional Process

The other optional devices relating to the device for manufacturing an inorganic oxide-containing layer is not particularly limited and can be suitably selected to suit to a particular application unless it has an adverse impact on the effects of the present disclosure. It includes, for example, a heating device.
The other optional process relating to the method of manufacturing an inorganic oxide-containing layer is not particularly limited and can be suitably selected to suit to a particular application unless it has an adverse impact on the effects of the present disclosure. It includes, for example, heating.

Heating Device and Heating

The heating device heats the liquid composition or the liquid composition for inkjet discharging discharged with the discharging device.
The heating process executes heating the liquid composition or the liquid composition for inkjet discharging discharged in the discharging process.
The liquid composition layer can be dried by the heating.
FIG. 1 is a schematic diagram illustrating an example of the method of manufacturing a layer containing an inorganic oxide relating to the present embodiment.
A liquid composition 12A is stored in a tank 307 of a liquid discharging device 300 and supplied from the tank 307 to a liquid discharging head 306 via a tube 308. The number of the liquid discharging devices is not limited to one but can be two or more.
In order to manufacture an electrode, an electrode substrate 11 is disposed on a stage 310 and then the liquid discharging head 306 discharges liquid droplets of the liquid composition 12A to the electrode substrate 11. At this point, it is possible to move the stage 310 or the liquid discharging head 306. The liquid composition 12A discharged forms an electrode mixture layer 12.
In addition, the liquid discharging device 300 may optionally include a mechanism of capping the nozzle of the liquid discharging head 306 to prevent it from drying while the liquid discharging head is not discharging the liquid composition 12A.
FIG. 2 is a schematic diagram illustrating an example of the device 200 for manufacturing an inorganic oxide-containing layer that executes the method of manufacturing an inorganic oxide-containing layer of the present embodiment.
The device 200 for manufacturing an inorganic oxide-containing layer illustrated in FIG. 2 manufactures a solid electrolyte layer or an electrode mixture layer using the liquid composition mentioned above. The device 200 for manufacturing an inorganic oxide-containing layer includes a discharging unit 10 for executing applying a liquid composition 7 to a print substrate 4 having a target for discharging to form a liquid composition layer and a heating unit 30 for executing heating the liquid composition layer to obtain an inorganic oxide-containing layer. The device 200 for manufacturing an inorganic oxide-containing layer includes a conveyor unit 5 that conveys the print substrate 4 in the device in the sequence of the discharging unit 10 and the heating unit 30 at a preset speed.
The method of manufacturing the print substrate 4 having a target for discharging such as the electrode substrate or the active material mentioned above is not particularly limited. The print substrate can be manufactured utilizing a known method.
The discharging unit 10 includes a print device 1a as an example of the application device that executes the application of the liquid composition 7 onto the print substrate 4, a container 1b that contains the liquid composition 12A, and a supply tube 1c that supplies the liquid composition 7 in the container 1b to the print device 1a.
The container 1b accommodates the liquid composition 7. The discharging unit 10 discharges the liquid composition 7 from the print device 1a to apply the liquid composition 7 onto the print substrate 4 to form a film-like

liquid composition layer. The container 1b may be configured and integrated with a device for manufacturing an inorganic oxide-containing layer. Alternatively, it can be configured removable from the device for manufacturing an inorganic oxide-containing layer. In addition, the container 1b may be configured to add the liquid composition 7 to a container integrated with a device for manufacturing an inorganic oxide-containing layer or a container detachable from a device for manufacturing an inorganic oxide-containing layer.

The container 1b and the supply tube 1c can be arbitrarily selected as long as the liquid composition 7 can be stably stored and supplied.

As illustrated in FIG. 2, the heating unit 30 includes a heater 3a, which dries and removes the solvent remaining in the liquid composition layer. An inorganic oxide-containing layer is thus formed. The heating unit 30 may remove the solvent under a reduced pressure.

The heater 3a is not particularly limited and can be suitably selected to suit to a particular application. It includes, but is not limited to, an IR heater, a heated wind heater, and a combination thereof.

Further, the heating temperature and the heating time can be appropriately selected according to the boiling point of the solvent contained in the liquid composition 7 and the thickness of formed film.

FIG. 3 is a schematic diagram illustrating another example of a device (liquid discharging device) for manufacturing an inorganic oxide-containing layer for executing the method of manufacturing an inorganic oxide-containing layer of the present embodiment.

A liquid discharging device 300' circulates a liquid composition in a liquid discharging head 306, a tank 307, and a tube 308 by controlling a pump 3101 and valves 311 and 312.

The liquid discharging device 300' includes an external tank 313. The liquid composition can be supplied to the tank 307 from the external tank 313 by controlling the pump 3101 and the valves 311, 312, and 314 when the liquid composition in the tank 307 decreases.

The liquid composition is discharged to the target position on a target substrate using the device for manufacturing an inorganic oxide-containing layer.

The solid electrolyte layer or the electrode mixture layer as an example of the inorganic oxide-containing layer can be suitably used as a part of an electrochemical device. The other configurations other than the solid electrolyte layer or the electrode mixture layer are not particularly limited and can be known members, which include a positive electrode, a negative electrode, and a separator.

FIG. 4 is a diagram illustrating an example of the method of manufacturing an electrode according to the present embodiment.

The method of manufacturing an electrode 100 includes sequentially discharging a liquid composition 12A onto the electrode substrate 11 using the liquid discharging device 300'.

First, the electrode substrate 11 having a long and thin shape is prepared. The electrode substrate 11 is wound around a tubular core. A feeding roller 304 and a reeling roller 305 are disposed in order to form the electrode mixture layer 12 on the upper surface in FIG. 4. The feeding roller 304 and the reeling roller 305 rotate counterclockwise to convey the electrode substrate 11 from the right to left in FIG. 4. The liquid discharging head 306 disposed above the electrode substrate 11 between the feeding roller 304 and the reeling roller 305 discharges liquid droplets of the liquid composition 12A onto the electrode substrate 11 sequentially conveyed in the same manner as illustrated in FIG. 1.

Two or more of the liquid discharging heads 306 can be positioned in the direction substantially parallel or perpendicular to the conveyance direction of the electrode substrate 11. Next, the electrode substrate 11 onto which the liquid droplets of the liquid composition 12A are discharged is conveyed to a heating mechanism 309 by the feeding roller 304 and the reeling roller 305. As a result, the electrode mixture layer 12 is formed to obtain an electrode 100. Thereafter, the electrode 100 is cut to a desired size by processing such as punching.

The heating mechanisms 309 can be disposed either above or below the electrode substrate 11 or two or more of the heating mechanisms 309 are disposed.

The heating mechanism 309 is not particularly limited unless it contacts the liquid composition 12A in a direct manner. It includes, but is not particularly limited to, a resistance heater, an infrared heater, and a fan heater. Two or more of the heating mechanism 309 can be disposed. A device for curing utilizing ultraviolet for polymerization can be also disposed.

In addition, the liquid composition 12A discharged to the electrode substrate 11 is preferably heated at the stage or a heating mechanism other than the stage. The heating mechanisms 309 can be disposed either above or below the electrode substrate 11 or two or more of the heating mechanisms 309 are disposed.

The heating temperature is not particularly limited. The liquid composition 12A dries by heating, thereby forming an electrode mixture layer.

As illustrated in FIG. 5, the tank 307 may supply ink from tanks 313A and 313B connected to tanks 307A and 307B, respectively. The liquid discharging head 306 may include a head 306A and a head 306B.

The method of manufacturing an electrochemical device can be suitably selected from any known method as long as the inorganic oxide-containing layer of the present disclosure is used.

Negative Electrode

FIG. 6 is a diagram illustrating an example of the negative electrode of the present embodiment.
A negative electrode 101 includes a negative substrate 111 with a negative electrode material mixture layer 121 formed on one side. The shape of the negative electrode 100 is not particularly limited and can be a planar plate, for example. The negative substrate 111 can be made of materials such as stainless steel, nickel, aluminum, and copper.
The negative electrode material mixture layer 121 can be formed on both sides of the negative substrate 111.
The negative electrode 100 can be manufactured by using a device for manufacturing an inorganic oxide-containing layer mentioned above.

Positive Electrode

FIG. 7 is a diagram illustrating an example of the positive electrode of the present embodiment.
A positive electrode 20 includes a positive substrate 21 with a positive electrode material mixture layer 22 formed on one side. The shape of the positive electrode 20 is not particularly limited and can be a planar plate, for example. The positive substrate 21 can be made of materials such as stainless steel, aluminum, titanium, and tantalum.
The positive electrode material mixture layer 22 can be formed on both sides of the positive substrate 21.
The positive electrode 100 can be manufactured by using a device for manufacturing an inorganic oxide-containing layer mentioned above.

Electrochemical Device

The electrochemical device includes a current collector, a layer containing an inorganic oxide and an organic solvent on the current collector, and other optional members.
The current collector is the same as those mentioned above as the electrode substrate.
The inorganic oxide is the same as those in the liquid composition mentioned above.
The organic solvent in a first example of the electrochemical device is the same as that in the first aspect of the liquid composition mentioned above. The organic solvent has a topological index chai4v of 0.9 or greater and, in the Chemical Formula 1 illustrated above, $R_1$ and $R_2$ each, independently represent straight chain alkyl groups or straight chain alkoxy groups.
The organic solvent in a second example of the electrochemical device is the same as that in the second aspect of the liquid composition mentioned above. The organic solvent has a topological index chai4v of 0.3 or greater and, in the Chemical Formula 1 of the organic solvent, $R_1$ and $R_2$ each, independently represent straight or branched chain alkyl groups or straight or branched chain alkoxy groups and at least one of $R_1$ and $R_2$ represents a branched chain alkyl group or a branched chain alkoxy group.
The proportion of the organic solvent in a layer containing at least the inorganic oxide and the organic solvent is not particularly limited and can be suitably selected to suit to a particular application in the range of from 1 to 100 ppm.
The method of measuring the proportion of the organic solvent in a layer containing at least the inorganic oxide and the organic solvent is not particularly limited and can be suitably selected to suit to a particular application. One way of measuring is to: punch out a 20 mm square of a layer containing at least the inorganic oxide and the organic solvent, followed by dipping the square in deuterated tetrahydrofuran in a glass bin, thereby to obtain an eluate; filter the eluate obtained with a syringe filter, followed by a quantity operation using $^1$H-NMR; and obtain the relationship between the $^1$H-NMR peak area and the amount of the organic solvent by creating a calibration curve.
The electrochemical device may include an electrolyte, a separator, and an exterior other than the electrode containing a layer containing at least the inorganic oxide and the organic solvent.
No separator is necessary when a solid electrolyte or a gel electrolyte is used.

Electrolyte

An aqueous solution of electrolyte or a non-aqueous electrolyte can be used as the electrolyte.

Aqueous Solution of Electrolyte

In an aqueous solution of electrolyte, an electrolyte salt is dissolved in water.
Specific examples include, but are not limited to, sodium hydroxide, potassium hydroxide, sodium chloride, potassium chloride, ammonium chloride, zinc chloride, zinc acetate, zinc bromide, zinc ionide, zinc tartarate, and zinc perchlorate.

## Non-aqueous Electrolyte

Non-aqueous liquid electrolytes or non-aqueous solid electrolytes, or gel electrolytes can be used as the non-aqueous electrolyte.

## Non-aqueous Liquid Electrolyte

In a non-aqueous liquid electrolyte, an electrolyte salt is dissolved in a non-aqueous solvent.

## Non-aqueous Solvent

The non-aqueous solvent is not particularly limited. It is preferable to use a non-protic organic solvent. The non-protic organic solvent includes a carbonate-based organic solvent such as a chain carbonate or a cyclic carbonate. Of these, chain carbonates are preferable because they are highly capable of dissolving an electrolyte salt. The non-protic organic solvent preferably has a low viscosity.

Specific examples of the chain carbonate include, but are not limited to, dimethyl carbonate (DMC), diethyl carbonate (DEC), and methylethyl carbonate (EMC).

The proportion of the chain carbonate in a non-aqueous solvent is preferably 50 percent by mass or greater. A proportion of the chain carbonate in a non-aqueous solvent of 50 percent by mass or greater reduces the content of cyclic materials even if they are cyclic materials other than the chain carbonate such as cyclic carbonates or esters with a high dielectric constant in a non-aqueous solvent. In this range of proportion, the viscosity of a non-aqueous electrolyte is low even when the non-aqueous electrolyte has a concentration as high as 2M or greater, which helps the non-aqueous electrolyte penetrate the electrode and enhances ion diffusion.

Examples of the cyclic carbonate include, but are not limited to, propylene carbonate (PC), ethylene carbonate (EC), butylene carbonate (BC), and vinylene carbonate (VC).

Examples of the non-aqueous solvent other than the carbonate-based organic solvent include, but are not limited to, ester-based organic solvents such as cyclic esters and chain esters and ether-based organic solvents such as cyclic ethers and chain ethers.

Examples of the cyclic ester include, but are not limited to, γ-butyrolactone (γBL), 2-methyl-γ-butyrolactone, acetyl-γ-butyrolactone, and γ-valerolactone. Examples of the chain ester include, but are not limited to, an ester of alkyl propionate, an ester of dialkyl malonate, an ester of alkyl acetate (e.g., methyl acetate (MA) and ethyl acetate), and an ester of alkyl formate (e.g., methyl formate (MF) and ethyl formate).

Examples of the cyclic ether include, but are not limited to, tetrahydrofuran, alkyltetrahydrofuran, alkoxytetrahydrofuran, dialkoxytetrahydrofuran, 1,3-dioxolane, alkyl-1,3-dioxolane, and 1,4-dioxolane.

Examples of the chain ether include, but are not limited to, 1,2-dimethoxyethane (DME), diethyl ether, ethylene glycol dialkyl ether, diethylene glycol dialkyl ether, triethylene glycol dialkyl ether, and tetraethylene glycol dialkyl ether.

## Electrolyte Salt

The electrolyte salt is not particularly limited as long as the electrolyte salt has a high degree of ion conductivity and can be dissolved in a non-aqueous solvent.

The electrolyte salt preferably contains a halogen atom. One of the cations constituting an electrolyte salt is a lithium ion. Examples of anions constituting an electrolytic salt include, but are not limited to, $BF_4^-$, $PF_6^-$, $AsF_6^-$, $CF_3SO_3^-$, $(CF_3SO_2)_2N^-$, and $(C_2F_5SO_2)_2N^-$.

Specific examples of the lithium salts include, but are not limited to, lithium hexafluorophosphate ($LiPF_6$), lithium fluoroborate ($LiBF_4$), lithium hexafluoroarsenate ($LiAsF_6$), lithium trifluoromethasulfonate ($LiCF_3SO_3$), lithium bis(trifluoromethylsulfonyl)imide ($LiN(C_3SO_2)_2$), and lithium bis (pentafluoroethylsulfonyl)imide ($LiN(C_2F_5SO_2)_2$). Of these, $LiPF_6$ is preferable in terms of ion conductivity and $LiBF_4$ is preferable in terms of stability.

Those electrolyte salts can be used alone or in combination.

The concentration of the electrolyte salt in a non-aqueous electrolyte can be suitably selected to suit to a particular application. The concentration is preferably 1 to 2 mol/L when a non-aqueous electrochemical device is of a swing type. The concentration is preferably 2 to 4 mol/L when a non-aqueous electrochemical device is of a reserve type.

## Solid Electrolyte

The solid electrolyte can be the materials mentioned above.

Gel Electrolyte

The gel electrolyte is not particularly limited and can be suitably selected to suit to a particular application as long as it demonstrates ion conductivity.

Examples of polymers constituting the network structure of a gel electrolyte include, but are not limited to, polyethylene oxide, polypropylene oxide, polyacrylonitrile, polymethyl methacrylate, polyvinyl chloride, a copolymer of vinylidene fluoride and propylene hexafluoride, and polyethylene carbonate.

One of the solvent molecules held is an ionic liquid. Examples of the ionic liquid include, but are not limited to, 1-methyl-1-propylpyrrolidinium bis(fluorosulfonyl imide), 1-butyl-1-methylpyrrolidinium bis(fluorosulfonyl imide), 1-methyl-1-propylpiperidinium bis(fluorosulfonyl imide), 1-ethyl-3-methylimidazolium bis(fluorosulfonyl imide), 1-methyl-3-propylimidazolium bis(fluorosulfonyl imide), and N,N-diethyl-N-methyl-N-(2-methoxyethyl) ammonium bis(fluorosulfonyl)imide.

A mixture of a liquid such as tetraglyme, propylene carbonate, fluoroethylene carbonate, ethylene carbonate, or diethyl carbonate and a lithium salt may also be used.

Specific examples of the lithium salts include, but are not limited to, lithium hexafluorophosphate ($LiPF_6$), lithium fluoroborate ($LiBF_4$), lithium hexafluoroarsenate ($LiAsF_6$), lithium trifluoromethasulfonate ($LiCF_3SO_3$), lithium bis(trifluoromethylsulfonyl)imide ($LiN(C_3SO_2)_2$), and lithium bis (pentafluoroethylsulfonyl)imide ($LiN(C_2F_5SO_2)_2$).

Materials other than those mentioned above can be used without any problem unless they are out of the scope of the present disclosure. These gel electrolytes can be used alone or in combination.

As an electrolyte material to be dissolved or dispersed in a liquid to form these gel electrolytes, a solution in which the polymer compound mentioned above and an ionic liquid or a lithium salt are dissolved may be used. In addition, a polyethylene oxide or a polypropylene oxide having acrylate groups at both terminals, which is a precursor of the gel electrolyte, is possibly used in combination with a solution in which an ionic liquid or a lithium salt is dissolved.

Separator

A separator is optionally disposed between a negative electrode and a positive electrode to prevent a short circuit therebetween.

Examples of the separator include, but are not limited to, paper such as kraft paper, vinylon mixed paper, and synthetic pulp mixed paper, cellophane, polyolefin nonwoven fabric such as polyethylene graft membrane and polypropylene melt blown nonwoven fabric, polyamide nonwoven fabric, and glass fiber nonwoven fabric, and micropore membrane.

The size of a separator is not particularly limited as long as it can be used for an electrochemical device. The separator may employ a single layer configuration or laminate configuration.

A separator is disposed when an aqueous solution of electrolyte or a non-aqueous liquid electrolyte is used. A solid electrolyte or a gel electrolyte obviates the need for a separator.

Exterior

The exterior is not particularly limited as long as it can seal an electrode, an electrolyte, and a separator or a solid electrolyte or a gel electrolyte.

Method of Manufacturing Electrochemical Device

The method of manufacturing an electrochemical device of the present embodiment includes manufacturing an electrode utilizing the method of manufacturing an inorganic oxide-containing layer described above, manufacturing an electrode device using the electrode, and manufacturing an electrochemical device using the electrode device.

Electrode Device

The electrode device includes an electrode and a separator.

FIG. 8 is a diagram illustrating an example of the electrode device for use in an electrochemical device.

In an electrode device 40, a negative electrode 15 and a positive electrode 25 are laminated via a separator 30B. The positive electrode 25 is disposed on both sides of the negative electrode 15. A lead wire 41 is connected to the negative electrode substrate 11B. A lead wire 42 is connected to the positive electrode substrate 21.

The separator 30B is replaced with a solid electrolyte or a gel electrolyte if a solid electrochemical device is used.

The negative electrode 15 includes a negative substrate 11B with negative electrode material mixture layers 12B formed on both sides.

The positive electrode 25 includes the positive substrate 21 with positive electrode material mixture layers 22 formed on both sides.

The number of the lamination of the negative electrodes 15 and the positive electrodes 25 of the electrode device 40 is not particularly limited. In addition, the number of the negative electrode 15 and the positive electrode 25 of the electrode device 40 can be the same or different.

Electrochemical Device

FIG. 9 is a diagram illustrating an example of an electrochemical device.

When an electrochemical element 1 is a liquid electrochemical device, an electrolyte layer 51 is formed by injecting an aqueous solution of electrolyte or a non-aqueous electrolyte into the electrode device 40. An exterior 52 seals the electrochemical device 40. In the electrochemical device 1, the lead wires 41 and 42 are led out to the outside of the exterior 52.

The separator 30B is replaced with a solid electrolyte or a gel electrolyte if the electrochemical device 1 is a solid electrolyte device.

The shape of the electrochemical device 1 is not particularly limited.

Examples include, but are not limited to, a laminate type, a cylinder type in which a sheet electrode and a separator are formed in a spiral shape, a cylinder type having an inside-out structure in which a pellet electrode and a separator are combined, and a coin type in which a pellet electrode and a separator are stacked.

Application of Electrochemical Device

The electrochemical device can be suitably used as a secondary battery.

The application of the electrochemical device is not particularly limited.

Examples include, but are not limited to, notebook computers, pen-input personal computers, mobile personal computers, electronic book players, cellular phones, portable facsimiles, portable copiers, portable printers, headphone stereos, video movies, liquid crystal televisions, handy cleaners, portable CDs, minidiscs, transceivers, electronic notebooks, calculators, memory cards, portable tape recorders, radios, backup power supplies, motors, lighting devices, toys, game machines, watches, strobes, cameras, and vehicles.

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

In the following Examples and Comparative Examples, chai4v, the solid content and the viscosity of a liquid composition, the median diameter $D_{50}$, the dispersibility, and the dischageability of the inorganic oxide in a liquid composition, and the rate characteristic of a secondary battery were calculated, measured, or evaluated in the following manners.

Calculation of Chai4v

The topological index chai4v of the organic solvent used was calculated using an open source library, RDKit, released on September 3, 2021.

Solid Content of Liquid Composition

The solid content of a liquid composition was calculated according to the following relationship.

Solid content = {(entire of solid portion in parts by mass) / (entire of solid portion in parts by mass) + organic solvent in parts by mass)} × 100 percent.

Viscosity of Liquid Composition

The viscosity of the liquid composition obtained was measured at 100 rpm and a room temperature of 25 degrees C using a TV 25 viscometer, cone and plate viscometer, manufactured by TOKI SANGYO CO., LTD.

Median Diameter $D_{50}$ of Inorganic Oxide

The particle size distribution of the inorganic oxide in the liquid composition obtained was measured at room temperature of 25 degrees C using a laser diffraction particle size distributor, Mastersizer 3000, manufactured by Malvern Panalytical Ltd. The median diameter at an accumulation frequency of 50 percent among the particle size distribution of the inorganic oxide in the liquid composition measured was determined as $D_{50}$.

Dispersibility of Inorganic Oxide in Liquid Composition

The dispersibility of the inorganic oxide in a liquid composition was evaluated according to the following evaluation criteria. The inorganic oxide graded as S or A is allowable. This evaluation criteria regulates the dispersibility at a level beyond the level of visual confirmation. The dispersibility graded S or A means that the surface ratio of inorganic oxide particles exposed to the surface is extremely high. If such an inorganic oxide is used as an active material, charges move smoothly via the surfaces, which achieves excellent battery characteristics. In addition, if a component such as a conductive assistant is added, the contact area between the active material and the conductive assistant increases, thereby obtaining more excellent battery characteristics.

Evaluation Criteria

The index of dispersibility was calculated based on the following relationship and evaluated according to the following evaluation criteria.

Index of dispersibility = $D_{50}$ of inorganic oxide in liquid composition / average primary particle diameter of inorganic oxide

S: index of dispersibility ≤ 1.5
A: 1.5 < index of dispersibility ≤ 2.0
C: 2.0 < index of dispersibility

Dischargeability

The liquid composition obtained was discharged onto aluminum foil fixed on a hot plate using a liquid discharging device, EV2500, manufactured by Ricoh Co., Ltd. The dischargeability was evaluated according to the following criteria. The grade A is allowable.

A: able to discharge
C: unable to discharge

Rate Characteristics of Secondary Battery

The liquid composition whose dischargeability was graded A was heated and dried at 120 degrees C on a hot plate to obtain a positive electrode. Using this positive electrode, the rate characteristics of the secondary battery were measured in the following manner.

The rate characteristic of the secondary battery was measured by using a discharge/charge measuring device TOSCAT 3001, manufactured by TOYO SYSTEM CO., LTD. The positive electrode manufactured was subjected to punching to obtain a circular form having a diameter of 16 mm. The resulting positive electrode, a glass separator (manufactured by ADVANTEC CO., LTD.) having a thickness of 100 μm, an electrolyte (1.5 mol/L, $LiPF_6$ / ethylene carbonate (EC) : dimethyl carbonate (DMC) : ethylmethyl carbonate (EMC) at a volume ratio of 1 : 1 : 1, manufactured by Kishida Chemical Co., Ltd., and lithium having a thickness of 200 μm as a counter electrode (manufactured by Honjo Metal Co., Ltd.) were placed in a coin can to obtain an electrochemical device.

This electrochemical device was subjected to constant current charging to 4.2 V at 25 degrees C, which was 20

percent of the capacity per unit of mass calculated from the theoretical capacity of the positive electrode active material, followed by constant current discharging to 3.0 V to complete an initial constant current charging and discharging. Thereafter, this charging and discharging was repeated again. This discharging capacity at this point was determined as the discharging capacity C0.

Moreover, this electrochemical device was subjected to charging and discharging once at room temperature of 25 degrees C in the same manner as mentioned above at the current of 200 percent of the capacity per unit of mass calculated from the theoretical capacity of the positive electrode active material. This discharging capacity at this point was determined as the discharging capacity C1.

The capacity retention is defined as the follows and evaluated according to the following evaluation criteria.

$$\text{Capacity retention } \Delta C \text{ (percent)} = \text{discharging capacity C1} / \text{discharging capacity C0} \times 100$$

S: $90 \leq$ capacity retention $\Delta C$
A: $80 \leq$ capacity retention $\Delta C < 90$
B: $70 \leq$ capacity retention $\Delta C < 80$
C: capacity retention $\Delta C < 70$

Example 1 (Reference)

A nickel positive electrode active material (hereinafter also referred to as NCM1, average primary particle diameter of 3.5 μm, manufactured by Toshima Manufacturing Co., Ltd.) as an inorganic oxide and ethyldecanoate (manufactured by Tokyo Chemical Industry Co. Ltd.) as an organic composition were mixed to obtain a solid content of 60 percent by mass, thereby obtaining a liquid composition.

The solid content of the liquid composition was calculated based on the method mentioned above. The viscosity of the liquid composition and the median diameter $D_{50}$ of the inorganic oxide in the liquid composition were measured based on the method mentioned above. The dispersibility of the inorganic oxide in the liquid composition was evaluated based on the method mentioned above. The results are shown in Tables 1 to 3.

Example 2 (Reference), Examples 3 to 6 and Comparative Examples 1 to 7

The liquid compositions of Examples 2 to 6 and Comparative Examples 1 to 7 were prepared in the same manner as in Example 1 except that the prescriptions shown in Table 1 were used as the organic solvents. The solid content and the viscosity of the liquid compositions and the median diameter $D_{50}$ and the dispersibility of the inorganic oxides in the liquid compositions were evaluated. The results are shown in Tables 1 to 3.

Example 7 (Reference) and Example 8

The liquid compositions of Examples 7 and 8 were prepared in the same manner as in Example 1 except that a nickel positive electrode active material (hereinafter also referred to as NCM2, average primary particle diameter of 8.5 μm, manufactured by Toshima Manufacturing Co., Ltd.) as the inorganic oxide and the organic solvents shown in Table 1 were used. The solid content and the viscosity of the liquid compositions and the median diameter $D_{50}$ and the dispersibility of the inorganic oxides in the liquid compositions were evaluated. The results are shown in Tables 1 to 3.

Example 9 (Reference) and Example 10

The liquid compositions of Examples 9 and 10 were prepared in the same manner as in Example 1 except that a nickel positive electrode active material (hereinafter also referred to as NCA, average primary particle diameter of 3.5 μm, manufactured by JFE MINERAL & ALLOY Co., LTD.) as the inorganic oxide and the prescriptions shown in Table 1 were used as the organic solvents. The solid content and the viscosity of the liquid compositions and the median diameter $D_{50}$ and the dispersibility of the inorganic oxides in the liquid compositions were evaluated. The results are shown in Tables 1 to 3.

Example 11 (Reference) and Example 12

The liquid compositions of Examples 11 and 12 were prepared in the same manner as in Example 1 except that α alumina (average primary particle diameter of 2.9 μm, manufactured by Nippon Light Metal Company, Ltd.) and the

prescriptions shown in Table 1 were used as the organic solvents. The solid content and the viscosity of the liquid compositions and the median diameter $D_{50}$ and the dispersibility of the inorganic oxides in the liquid compositions were evaluated. The results are shown in Tables 1 to 3.

Example 13 (Reference)

A nickel positive electrode active material (hereinafter also referred to as NCM1, average primary particle diameter of 3.5 μm, manufactured by Toshima Manufacturing Co., Ltd.) as an inorganic oxide, acetylene black as a conductive assistant (hereinafter also referred to as AB, 5 percent by mass to the active material, manufactured by Denka Company Limited), a dispersant S13940 (20 percent by mass to the conductive assistant, manufactured by The Lubrizol Corporation) for dispersing the conductive assistant, styrene butadiene rubber (SBR, 3 percent by mass to the active material, manufactured by Sigma-Aldrich Co. LLC.), and ethyldecanoate (manufactured by Tokyo Chemical Industry Co. Ltd.) as an organic composition were mixed to obtain a solid content of 70 percent by mass, thereby obtaining a liquid composition.

The solid content and the viscosity of the liquid composition and the median diameter $D_{50}$ and the dispersibility of the inorganic oxide in the liquid composition were evaluated based on the methods mentioned above. The results are shown in Tables 1 to 3.

The dischargeability was evaluated according to the operation mentioned above. Since the evaluation on the dischargeability was graded A, the liquid composition was discharged onto aluminum foil fixed on a hot plate, which was heated at 120 degrees C to dry the liquid composition, thereby manufacturing a positive electrode having a basis weight of 20 mg/cm$^2$. Using this positive electrode, the rate characteristics of the secondary battery were measured in the method mentioned above. The results are shown in Tables 1 to 3.

Example 14

The liquid composition of Example 14 was prepared in the same manner as in Example 13 except that ethyl isovalerate was used as the organic solvent. The solid content and the viscosity of the liquid compositions and the median diameter $D_{50}$, the dispersibility, the dischargeability of the inorganic oxides in the liquid compositions, and the rate characteristics of the secondary battery were evaluated. The results are shown in Tables 1 to 3.

Comparative Example 8

The liquid composition of Comparative Example 8 was prepared in the same manner as in Example 13 except that anisole was used as the organic solvent. The solid content and the viscosity of the liquid compositions and the median diameter $D_{50}$, the dispersibility, and the dischargeability of the inorganic oxides in the liquid compositions were evaluated. The results are shown in Tables 1 to 3.

Since the evaluation on the dischargeability was graded C, the liquid composition was applied by bar coating onto aluminum foil on a hot plate, which was heated at 120 degrees C to dry the liquid composition, thereby manufacturing a positive electrode having a basis weight of 20 mg/cm$^2$. Using this positive electrode, the rate characteristics of the secondary battery were measured in the method mentioned above. The evaluation results are shown in Table 3.

Comparative Example 9

The liquid composition of Comparative Example 9 was prepared in the same manner as in Comparative Example 8 except that a dispersant SC0708A (1.0 percent by mass to the active material, manufactured by NOF CORPORATION) for dispersing the inorganic oxide was used. The solid content and the viscosity of the liquid compositions and the median diameter $D_{50}$, the dispersibility, and the dischargeability of the inorganic oxides in the liquid compositions were evaluated. The results are shown in Tables 1 to 3.

Since the evaluation on the dischargeability was graded A, the liquid composition was discharged onto aluminum foil fixed on a hot plate, which was heated at 120 degrees C to dry the liquid composition, thereby manufacturing a positive electrode having a basis weight of 20 mg/cm$^2$. Using this positive electrode, the rate characteristics of the secondary battery were measured in the method mentioned above. The evaluation results are shown in Table 3.

Table 1

| | Inorganic oxide | | Dispersant for inorganic oxide | | Conductive assistant | |
|---|---|---|---|---|---|---|
| | Type | Proportion | Type | Proportion | Type | Proportion |
| Example 1 (Reference) | NCM1 | 100 | - | - | - | - |

(continued)

| | Inorganic oxide | | Dispersant for inorganic oxide | | Conductive assistant | |
|---|---|---|---|---|---|---|
| | Type | Proportion | Type | Proportion | Type | Proportion |
| Example 2 (Reference) | NCM1 | 100 | - | - | - | - |
| Comparative Example 1 | NCM1 | 100 | - | - | - | - |
| Comparative Example 2 | NCM1 | 100 | - | - | - | - |
| Comparative Example 3 | NCM1 | 100 | - | - | - | - |
| Example 3 | NCM1 | 100 | - | - | - | - |
| Example 4 | NCM1 | 100 | - | - | - | - |
| Example 5 | NCM1 | 100 | - | - | - | - |
| Comparative Example 4 | NCM1 | 100 | - | - | - | - |
| Example 6 | NCM1 | 100 | - | - | - | - |
| Comparative Example 5 | NCM1 | 100 | - | - | - | - |
| Comparative Example 6 | NCM1 | 100 | - | - | - | - |
| Comparative Example 7 | NCM1 | 100 | - | - | - | - |
| Example 7 (Reference) | NCM2 | 100 | - | - | - | - |
| Example 8 | NCM2 | 100 | - | - | - | - |
| Example 9 (Reference) | NCA | 100 | - | - | - | - |
| Example 10 | NCA | 100 | - | - | - | - |
| Example 11 (Reference) | $Al_2O_3$ | 100 | - | - | - | - |
| Example 12 | $Al_2O_3$ | 100 | - | - | - | - |
| Example 13 (Reference) | NCM1 | 100 | - | - | AB | 5 |
| Example 14 | NCM1 | 100 | - | - | AB | 5 |
| Comparative Example 8 | NCM1 | 100 | - | - | AB | 5 |
| Comparative Example 9 | NCM1 | 100 | SC0708A | 1.0 | AB | 5 |

| | Dispersant for conductive assistant | | Binder | |
|---|---|---|---|---|
| | Type | Proportion | Type | Proportion |
| Example 1 (Reference) | - | - | - | - |
| Example 2 (Reference) | - | - | - | - |
| Comparative Example 1 | - | - | - | - |
| Comparative Example 2 | - | - | - | - |
| Comparative Example 3 | - | - | - | - |
| Example 3 | - | - | - | - |
| Example 4 | - | - | - | - |
| Example 5 | - | - | - | - |
| Comparative Example 4 | - | - | - | - |
| Example 6 | - | - | - | - |
| Comparative Example 5 | - | - | - | - |
| Comparative Example 6 | - | - | - | - |
| Comparative Example 7 | - | - | - | - |

(continued)

| | Dispersant for conductive assistant | | Binder | |
|---|---|---|---|---|
| | Type | Proportion | Type | Proportion |
| Example 7 (Reference) | - | - | - | - |
| Example 8 | - | - | - | - |
| Example 9 (Reference) | - | - | - | - |
| Example 10 | - | - | - | - |
| Example 11 (Reference) | - | - | - | - |
| Example 12 | - | - | - | - |
| Example 13 (Reference) | S13940 | 1.0 | SBR | 3 |
| Example 14 | S13940 | 1.0 | SBR | 3 |
| Comparative Example 8 | S13940 | 1.0 | SBR | 3 |
| Comparative Example 9 | S13940 | 1.0 | SBR | 3 |

Table 2

| | Organic solvent | | | | | |
|---|---|---|---|---|---|---|
| | Type | R1 | | R2 | | chai4v |
| | | Type | Straight chain / branched chain | Type | Straight chain / branched chain | |
| Example 1 (Reference) | Ethyl decanoate | Alkyl group | Straight chain | Alkoxy group | Straight chain | 1.46 |
| Example 2 (Reference) | Ethyl heptanoate | Alkyl group | Straight chain | Alkoxy group | Straight chain | 0.93 |
| Comparative Example 1 | Ethyl valerate | Alkyl group | Straight chain | Alkoxy group | Straight chain | 0.55 |
| Comparative Example 2 | Ethyl butyrate | Alkyl group | Straight chain | Alkoxy group | Straight chain | 0.44 |
| Comparative Example 3 | Hexyl butylate | Alkyl group | Straight chain | Alkoxy group | Straight chain | 0.74 |
| Example 3 | Ethyl isovalerate | Alkyl group | Branched chain | Alkoxy group | Straight chain | 0.55 |
| Example 4 | Ethyl isobutylate | Alkyl group | Branched chain | Alkoxy group | Straight chain | 0.31 |
| Example 5 | Isoamyl acetate | Alkyl group | Straight chain | Alkoxy group | Branched chain | 0.44 |
| Comparative Example 4 | Isobutyl acetate | Alkyl group | Straight chain | Alkoxy group | Branched chain | 0.28 |
| Example 6 | 4-methyl-2pentanone | Alkyl group | Branched chain | Alkyl group | Straight chain | 0.57 |
| Comparative Example 5 | Diisopentyl ether | - | - | - | - | 0.74 |
| Comparative Example 6 | Anisole | - | - | - | - | 0.56 |
| Comparative Example 7 | N-methyl-2pyrroridone | - | - | - | - | 0.78 |

(continued)

| | Organic solvent | | | | | |
|---|---|---|---|---|---|---|
| | Type | R1 | | R2 | | chai4v |
| | | Type | Straight chain / branched chain | Type | Straight chain / branched chain | |
| Example 7 (Reference) | Ethyl decanoate | Alkyl group | Straight chain | Alkoxy group | Straight chain | 1.46 |
| Example 8 | Ethyl isovalerate | Alkyl group | Branched chain | Alkoxy group | Straight chain | 0.55 |
| Example 9 (Reference) | Ethyl decanoate | Alkyl group | Straight chain | Alkoxy group | Straight chain | 1.46 |
| Example 10 | Ethyl isovalerate | Alkyl group | Branched chain | Alkoxy group | Straight chain | 0.55 |
| Example 11 (Reference) | Ethyl decanoate | Alkyl group | Straight chain | Alkoxy group | Straight chain | 1.46 |
| Example 12 | Ethyl isovalerate | Alkyl group | Branched chain | Alkoxy group | Straight chain | 0.55 |
| Example 13 (Reference) | Ethyl decanoate | Alkyl group | Straight chain | Alkoxy group | Straight chain | 1.46 |
| Example 14 | Ethyl isovalerate | Alkyl group | Branched chain | Alkoxy group | Straight chain | 0.55 |
| Comparative Example 8 | Anisole | - | - | - | - | 0.56 |
| Comparative Example 9 | Anisole | - | - | - | - | 0.56 |

Table 3

| | Solid content (percent by mass) | Viscosity (mPa·s) | $D_{50}$ (μm) |
|---|---|---|---|
| Example 1 (Reference) | 60 | < 50 | 4.0 |
| Example 2 (Reference) | 60 | < 50 | 5.3 |
| Comparative Example 1 | 60 | < 50 | 9.9 |
| Comparative Example 2 | 60 | < 50 | 10.0 |
| Comparative Example 3 | 60 | < 50 | 10.0 |
| Example 3 | 60 | < 50 | 4.2 |
| Example 4 | 60 | < 50 | 6.4 |
| Example 5 | 60 | < 50 | 5.4 |
| Comparative Example 4 | 60 | < 50 | 8.2 |
| Example 6 | 60 | < 50 | 4.3 |
| Comparative Example 5 | 60 | < 50 | 56.8 |
| Comparative Example 6 | 60 | ≥ 200 | 60.9 |
| Comparative Example 7 | 60 | < 50 | 20.1 |
| Example 7 (Reference) | 60 | < 50 | 9.0 |
| Example 8 | 60 | < 50 | 8.5 |
| Example 9 (Reference) | 60 | < 50 | 5.1 |
| Example 10 | 60 | < 50 | 4.5 |

(continued)

| | Solid content (percent by mass) | Viscosity (mPa·s) | $D_{50}$ (μm) |
|---|---|---|---|
| Example 11 (Reference) | 60 | < 100 | 4.7 |
| Example 12 | 60 | < 100 | 4.3 |
| Example 13 (Reference) | 70 | > 100, ≤ 200 | 3.6 |
| Example 14 | 70 | ≤ 50 | 3.7 |
| Comparative Example 8 | 70 | > 200 | 21.5 |
| Comparative Example 9 | 50 | ≤ 50 | 3.7 |

| | Evaluation | | |
|---|---|---|---|
| | Dispersibility | Dischargeability | Capacity retention ΔC |
| Example 1 (Reference) | S | | |
| Example 2 (Reference) | A | | |
| Comparative Example 1 | C | | |
| Comparative Example 2 | C | | |
| Comparative Example 3 | C | | |
| Example 3 | S | | |
| Example 4 | A | | |
| Example 5 | A | | |
| Comparative Example 4 | C | | |
| Example 6 | S | | |
| Comparative Example 5 | C | | |
| Comparative Example 6 | C | | |
| Comparative Example 7 | C | | |
| Example 7 (Reference) | S | | |
| Example 8 | S | | |
| Example 9 (Reference) | S | | |
| Example 10 | S | | |
| Example 11 (Reference) | A | | |
| Example 12 | S | | |
| Example 13 (Reference) | S | A | A |
| Example 14 | S | A | S |
| Comparative Example 8 | C | C | A |
| Comparative Example 9 | S | A | C |

As seen in the results shown in Tables 1 to 3, the liquid compositions of Examples 1 and 2 demonstrate good dispersibility because they have a chai4v of 0.9 or greater and contain at least an inorganic oxide and an organic solvent represented by the Chemical Formula 1 illustrated above, where $R_1$ and $R_2$ each, independently represent straight chain alkyl groups or straight chain alkoxy group. On the other hand, the liquid compositions of Comparative Examples 1 to 3 having a chai4v less than 0.9 did not demonstrate good dispersibility.

The liquid compositions of Examples 3 to 6 demonstrate good dispersibility because they have a chai4v of 0.3 or greater and contain at least an inorganic oxide and an organic solvent represented by the Chemical Formula 1 illustrated above, where $R_1$ and $R_2$ each, independently represent straight or branched chain alkyl groups or straight or branched chain alkoxy groups and at least one of $R_1$ and $R_2$ represents a branched chain alkyl group or a branched chain alkoxy

group. On the other hand, the liquid composition of Comparative Example 4 having a chai4v less than 0.3 did not demonstrate good dispersibility.

Furthermore, when the chemical formula 1 in the liquid composition has $R_1$ of a branched chain alkyl group and $R_2$ of an alkoxy group, the liquid composition demonstrates more excellent dispersibility.

The liquid composition in Comparative Example 5, where an alkyl group having a branched chain is bonded to an ether group instead of a carbonyl group, did not demonstrate good dispersibility. In the case of Comparative Examples 6 and 7, where anisole or N-methyl-2pyrroridone was used as the other optional organic solvent, the liquid composition did not demonstrate good dispersibility.

As seen in the results shown in Tables 1 to 3, the liquid compositions of Examples 7 to 12, where the organic solvents of the present disclosure are used in combination with many types of the inorganic oxides, demonstrate good dispersibility.

The liquid compositions of Examples 13 and 14, which contain NCM1 as an inorganic oxide, ethyl decanoate demonstrating particularly good dispersibility as an organic solvent, a conductive assistant, a dispersant for dispersing the conductive assistant, and a binder as other optional components, demonstrate good dispersibility, thereby achieving good dischargeability, and excellent capacity retention. In the case of Comparative Example 8 where anisole was used as an organic solvent, the liquid composition did not demonstrate good dispersibility, resulting in poor dischargeability. Conversely, the liquid composition of Comparative Example 9 in which a dispersant for dispersing NCM1 was separately added demonstrates fair dispersibility but the capacity retention of the liquid composition significantly deteriorates.

## Claims

1. A liquid composition comprising:

   an inorganic oxide, wherein the inorganic oxide is a positive electrode active material or a negative electrode active material; and
   an organic solvent represented by the following Chemical Formula 1,

   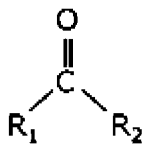

   Chemical Formula 1

   where $R_1$ and $R_2$ each, independently represent straight or branched chain alkyl groups or straight or branched chain alkoxy groups and at least one of $R_1$ and $R_2$ represents a branched chain alkyl group or a branched chain alkoxy group,
   wherein the organic solvent is selected from 3-methyl-2-butanone, 3-methyl-2-pentanone, 3-ethyl-2-pentanone, 2-methyl-3-pentanone, 2, 4-dimethyl-3-pentanone, 3-methyl-2-hexanone, 3-ethyl-2-hexanone, 3-propyl-2-hexanone, 4-methyl-2-pentanone, 4-methyl-2-hexanone, 5-methyl-2-hexanone, 2-methyl-3-hexanone, 3-methyl-2-heptanone, 4-methyl-2-heptanone, 5-methyl-2-heptanone, 6-methyl-2-heptanone, 2-methyl-3-heptanone, 2-methyl-4-heptanone, 3-methyl-2-octanone, 4-methyl-2-octanone, 5-methyl-2-octanone, 6-methyl-2-octanone, 7-methyl-2-octanone, isopropylacetate, isobutylacetate, isoamylacetate, t-butylacetate, 2-ethylhexylacetate, ethylpivalate, isopropylpropionate, isobutylpropionate, isoamylpropionate, t-butylpropionate, isopropylbutyrate, isobutylbutyrate, isopropylisobutyrate, butylisobutyrate, isobutylisobutyrate, pentylisobutyrate, isoamylisobutyrate, methyl-2-ethylbutyrate, ethyl-2-ethylbutyrate, ethyl-t-butylacetate, isopropylvalerate, isobutylvalerate, isoamylvalerate, methylisovalerate, ethylisovalerate, propylisovalerate, isopropylisovalerate, butylisovalerate, isobutylisovalerate, propylisovalerate, isoamylisovalerate, and ethyl-DL-2-methylbutyrate.

2. The liquid composition according to claim 1, wherein, in the Chemical Formula 1, $R_2$ represents a straight chain or branched chain alkyl group and $R_1$ represents a branched chain alkyl group.

3. The liquid composition according to claim 1 or 2, wherein the positive electrode active material or the negative electrode active material is capable of receiving or releasing an alkali metal ion.

4. The liquid composition according to any one of claims 1 to 3, wherein the inorganic oxide has a modal diameter of from

0.5 to 10 μm.

5. The liquid composition according to any one of claims 1 to 4, wherein the liquid composition has a viscosity of 200 mPa·s or less.

6. The liquid composition according to any one of claims 1 to 5, wherein the liquid composition has a solid content of 60 percent by mass or greater.

7. A liquid composition for inkjet discharging comprising:
the liquid composition of any one of claims 1 to 6.

8. A container (1b) containing the liquid composition of any one of claims 1 to 6 or the liquid composition for inkjet discharging containing the liquid composition of any one of claims 1 to 6.

9. A device (300;200;300') for manufacturing an inorganic oxide-containing layer, comprising:

the container (1b) of claim 8; and
a discharging device (10) comprising an inkjet head (306) configured to discharge the liquid composition in the container (1b).

10. A method of manufacturing an inorganic oxide-containing layer, comprising:
discharging the liquid composition of any one of claims 1 to 6 or the liquid composition for inkjet discharging containing the liquid composition of any one of claims 1 to 6 using an inkjet head.

**Patentansprüche**

1. Flüssige Zusammensetzung umfassend:

ein anorganisches Oxid, wobei das anorganische Oxid ein aktives Material für eine positive Elektrode oder ein aktives Material für eine negative Elektrode ist; und
ein organisches Lösungsmittel, dargestellt durch die folgende chemische Formel 1,

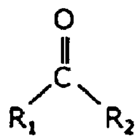

Chemische Formel 1

wobei $R_1$ und $R_2$ jeweils unabhängig voneinander geradkettige oder verzweigte Alkylgruppen oder geradkettige oder verzweigte Alkoxygruppen darstellen und mindestens eines von $R_1$ und $R_2$ eine verzweigte Alkylgruppe oder eine verzweigte Alkoxygruppe darstellt,
wobei das organische Lösungsmittel ausgewählt ist aus 3-Methyl-2-butanon, 3-Methyl-2-pentanon, 3-Ethyl-2-pentanon, 2-Methyl-3-pentanon, 2,4-Dimethyl-3-pentanon, 3-Methyl-2-hexanon, 3-Ethyl-2-hexanon, 3-Propyl-2-hexanon, 4-Methyl-2-pentanon, 4-Methyl-2-hexanon, 5-Methyl-2-hexanon, 2-Methyl-3-hexanon, 3-Methyl-2-heptanon, 4-Methyl-2-heptanon, 5-Methyl-2-heptanon, 6-Methyl-2-heptanon, 2-Methyl-3-heptanon, 2-Methyl-4-heptanon, 3-Methyl-2-octanon, 4-Methyl-2-octanon, 5-Methyl-2-octanon, 6-Methyl-2-octanon, 7-Methyl-2-octanon, Isopropylacetat, Isobutylacetat, Isoamylacetat, tert-Butylacetat, 2-Ethylhexylacetat, Ethylpivalat, Isopropylpropionat, Isobutylpropionat, Isoamylpropionat, tert-Butylpropionat, Isopropylbutyrat, Isobutylbutyrat, Isopropylisobutyrat, Butylisobutyrat, Isobutylisobutyrat, Pentylisovalerat, Isoamylisobutyrat, Methyl-2-ethylbutyrat, Ethyl-2-ethylbutyrat, Ethyltert-butylacetat, Isopropylvalerat, Isobutylvalerat, Isoamylvalerat, Methylisovalerat, Ethylisovalerat, Propylisovalerat, Isopropylisovalerat, Butylisovalerat Isobutylisovalerat, Propylisovalerat, Isoamylisovalerat und Ethyl-DL-2-methylbutyrat.

2. Flüssige Zusammensetzung nach Anspruch 1, wobei in der chemischen Formel 1 $R_2$ eine geradkettige oder verzweigte Alkylgruppe darstellt und $R_1$ eine verzweigte Alkylgruppe darstellt.

**3.** Flüssige Zusammensetzung nach Anspruch 1 oder 2, wobei das aktive Material für eine positive Elektrode oder das aktive Material für eine negative Elektrode in der Lage ist, ein Alkalimetallion aufzunehmen oder abzugeben.

**4.** Flüssige Zusammensetzung nach einem der Ansprüche 1 bis 3, wobei das anorganische Oxid einen modalen Durchmesser von 0,5 bis 10 μm aufweist.

**5.** Flüssige Zusammensetzung nach einem der Ansprüche 1 bis 4, wobei die flüssige Zusammensetzung eine Viskosität von 200 mPa·s oder weniger aufweist.

**6.** Flüssige Zusammensetzung nach einem der Ansprüche 1 bis 5, wobei die flüssige Zusammensetzung einen Feststoffgehalt von 60 Masseprozent oder mehr aufweist.

**7.** Flüssige Zusammensetzung zur Tintenstrahlentladung, umfassend:
die flüssige Zusammensetzung nach einem der Ansprüche 1 bis 6.

**8.** Behälter (1b), der die flüssige Zusammensetzung nach einem der Ansprüche 1 bis 6 enthält, oder die flüssige Zusammensetzung zur Tintenstrahlentladung, die die flüssige Zusammensetzung nach einem der Ansprüche 1 bis 6 enthält.

**9.** Vorrichtung (300;200;300') zur Herstellung einer anorganischen oxidhaltigen Schicht, umfassend:

den Behälter (1b) nach Anspruch 8; und
eine Entladevorrichtung (10), die einen Tintenstrahlkopf (306) umfasst, der zum Entladen der flüssigen Zusammensetzung im Behälter (1b) konfiguriert ist.

**10.** Verfahren zur Herstellung einer anorganischen oxidhaltigen Schicht, umfassend:
Entladen der flüssigen Zusammensetzung nach einem der Ansprüche 1 bis 6 oder der flüssigen Zusammensetzung zur Tintenstrahlentladung, die die flüssige Zusammensetzung nach einem der Ansprüche 1 bis 6 enthält, mittels eines Tintenstrahlkopfes.

## Revendications

**1.** Composition liquide comprenant :

un oxyde inorganique, dans laquelle l'oxyde inorganique est un matériau actif d'électrode positive ou un matériau actif d'électrode négative ; et
un solvant organique représenté par la Formule Chimique 1 suivante,

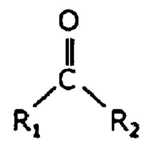

Formule Chimique 1

où $R_1$ et $R_2$ représentent chacun, indépendamment, des groupes alkyles à chaîne droite ou ramifiée ou des groupes alcoxy à chaîne droite ou ramifiée et au moins l'un de $R_1$ et $R_2$ représente un groupe alkyle à chaîne ramifiée ou un groupe alcoxy à chaîne ramifiée,
dans laquelle le solvant organique est choisi parmi la 3-méthyl-2-butanone, la 3-méthyl-2-pentanone, la 3-éthyl-2-pentanone, la 2-méthyl-3-pentanone, la 2,4-diméthyl-3-pentanone, la 3-méthyl-2-hexanone, la 3-éthyl-2-hexanone, la 3-propyl-2-hexanone, la 4-méthyl-2-pentanone, la 4-méthyl-2-hexanone, la 5-méthyl-2-hexanone, la 2-méthyl-3-hexanone, la 3-méthyl-2-heptanone, la 4-méthyl-2-heptanone, la 5-méthyl-2-heptanone, la 6-méthyl-2-heptanone, la 2-méthyl-3-heptanone, la 2-méthyl-4-heptanone, la 3-méthyl-2-octanone, la 4-méthyl-2-octanone, la 5-méthyl-2-octanone, la 6-méthyl-2-octanone, la 7-méthyl-2-octanone, l'acétate d'isopropyle, l'acétate d'isobutyle, l'acétate d'isoamyle, l'acétate de tert-butyle, l'acétate de 2-éthylhexyle, le pivalate d'éthyle, le propionate d'isopropyle, le propionate d'isobutyle, le propionate d'isoamyle, le propionate de tert-butyle, le butyrate d'isopropyle, le butyrate d'isobutyle, l'isobutyrate d'isopropyle, l'isobutyrate de butyle, l'isobutyrate d'isobutyle, l'isobutyrate de pentyle, l'isobutyrate d'isoamyle, le méthyl-2-éthylbutyrate, l'éthyl-2-éthylbutyrate, l'éthyl-t-butylacétate, le valérate d'isopropyle, le valérate d'isobutyle, le valérate d'isoamyle, l'isovalérate de méthyle, l'isovalérate d'éthyle, l'isovalérate de propyle, l'isovalérate d'isopropyle, l'isovalérate de butyle, l'isovalérate d'isobutyle, l'isovalérate de propyle, l'isovalérate d'isoamyle et l'éthyl-DL-2-méthylbutyrate.

**2.** Composition liquide selon la revendication 1, dans laquelle $R_2$ représente un groupe alkyle à chaîne droite ou à chaîne ramifiée dans la Formule Chimique 1 et $R_1$ représente un groupe alkyle à chaîne ramifiée.

**3.** Composition liquide selon la revendication 1 ou 2, dans laquelle le matériau actif d'électrode positive ou le matériau actif d'électrode négative est capable de recevoir ou de libérer un ion de métal alcalin.

**4.** Composition liquide selon l'une quelconque des revendications 1 à 3, dans laquelle l'oxyde inorganique présente un diamètre modal de 0,5 à 10 $\mu$m.

**5.** Composition liquide selon l'une quelconque des revendications 1 à 4, dans laquelle la composition liquide présente une viscosité de 200 mPa·s ou moins.

**6.** Composition liquide selon l'une quelconque des revendications 1 à 5, dans laquelle la composition liquide présente une teneur en solides de 60 pour cent en masse ou plus.

**7.** Composition liquide pour décharge à jet d'encre comprenant :
la composition liquide de l'une quelconque des revendications 1 à 6.

**8.** Récipient (1b) contenant la composition liquide selon l'une quelconque des revendications 1 à 6 ou la composition liquide pour décharge à jet d'encre contenant la composition liquide selon l'une quelconque des revendications 1 à 6.

**9.** Dispositif (300 ; 200 ; 300') pour la fabrication d'une couche contenant un oxyde inorganique, comprenant :

le récipient (1b) selon la revendication 8 ; et
un dispositif de décharge (10) comprenant une tête à jet d'encre (306) configurée pour décharger la composition liquide dans le récipient (1b).

**10.** Procédé de fabrication d'une couche contenant un oxyde inorganique, comprenant : la décharge de la composition liquide selon l'une quelconque des revendications 1 à 6 ou de la composition liquide pour décharge à jet d'encre contenant la composition liquide selon l'une quelconque des revendications 1 à 6 à l'aide d'une tête à jet d'encre.

FIG. 1

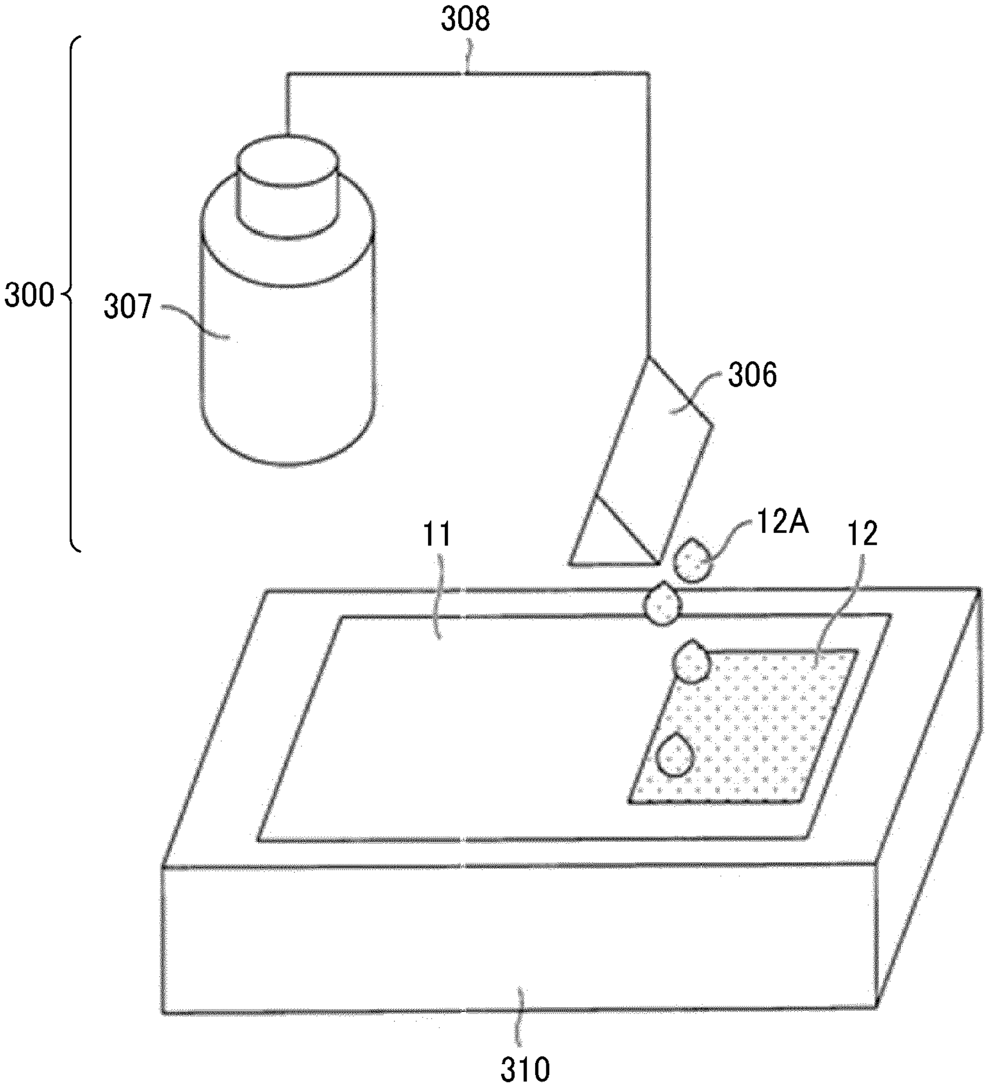

FIG. 2

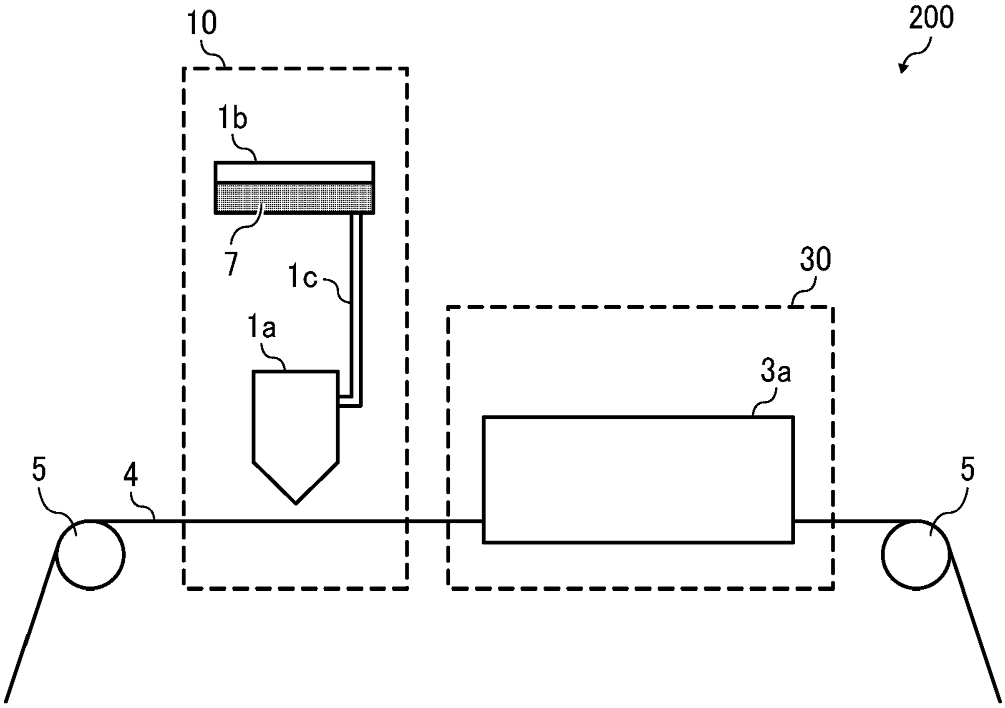


FIG. 3

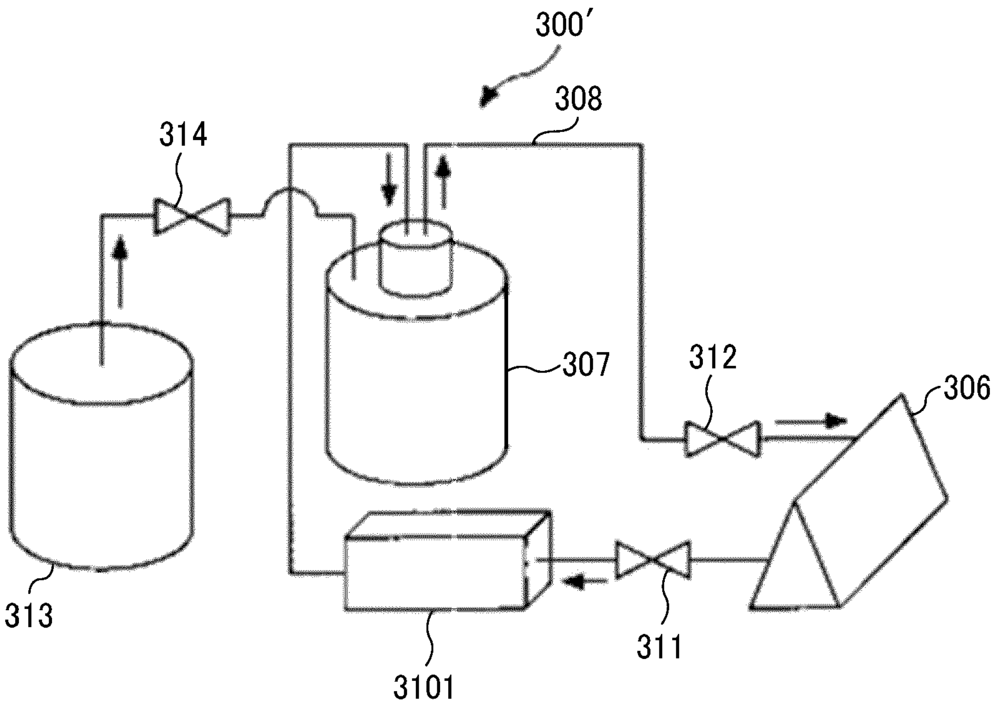

FIG. 4

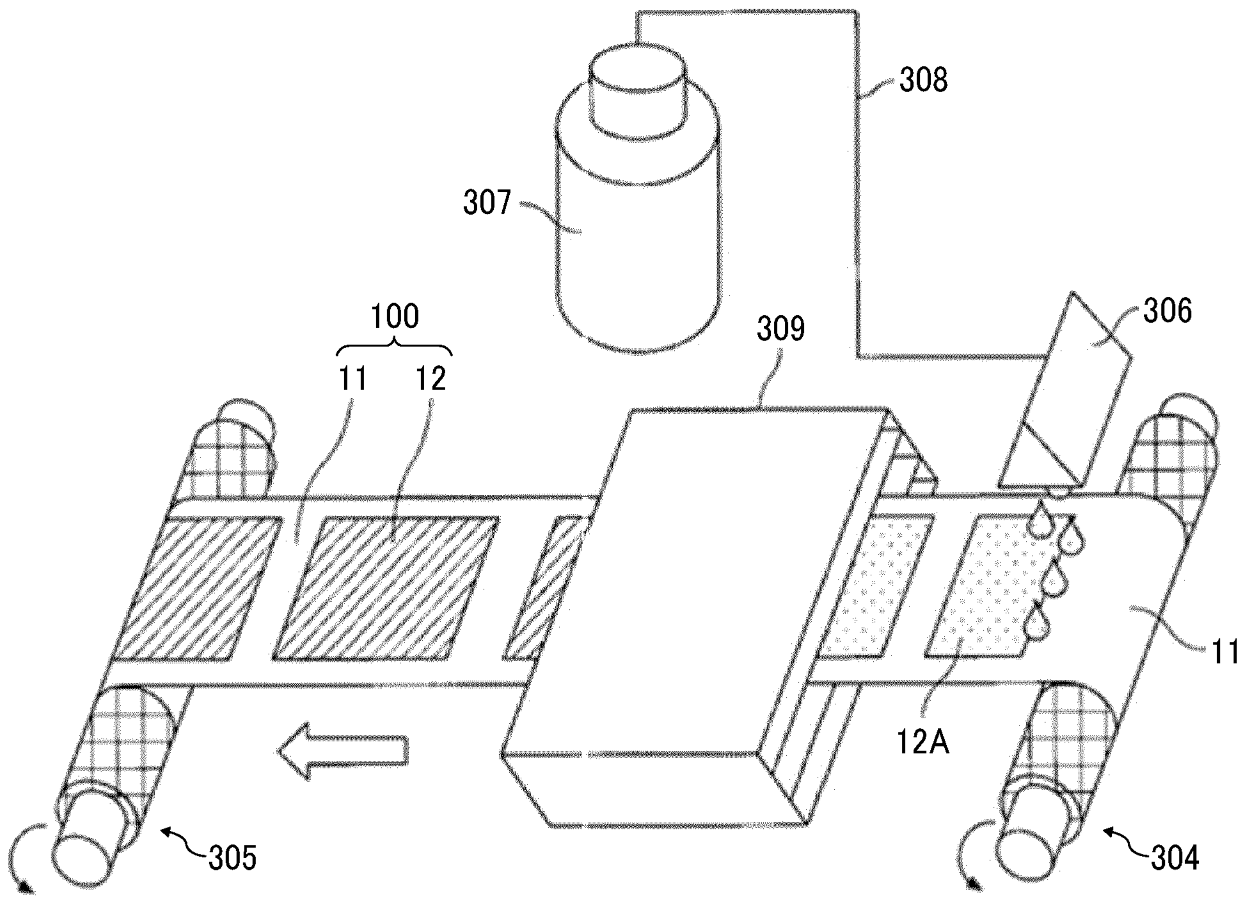

FIG. 5

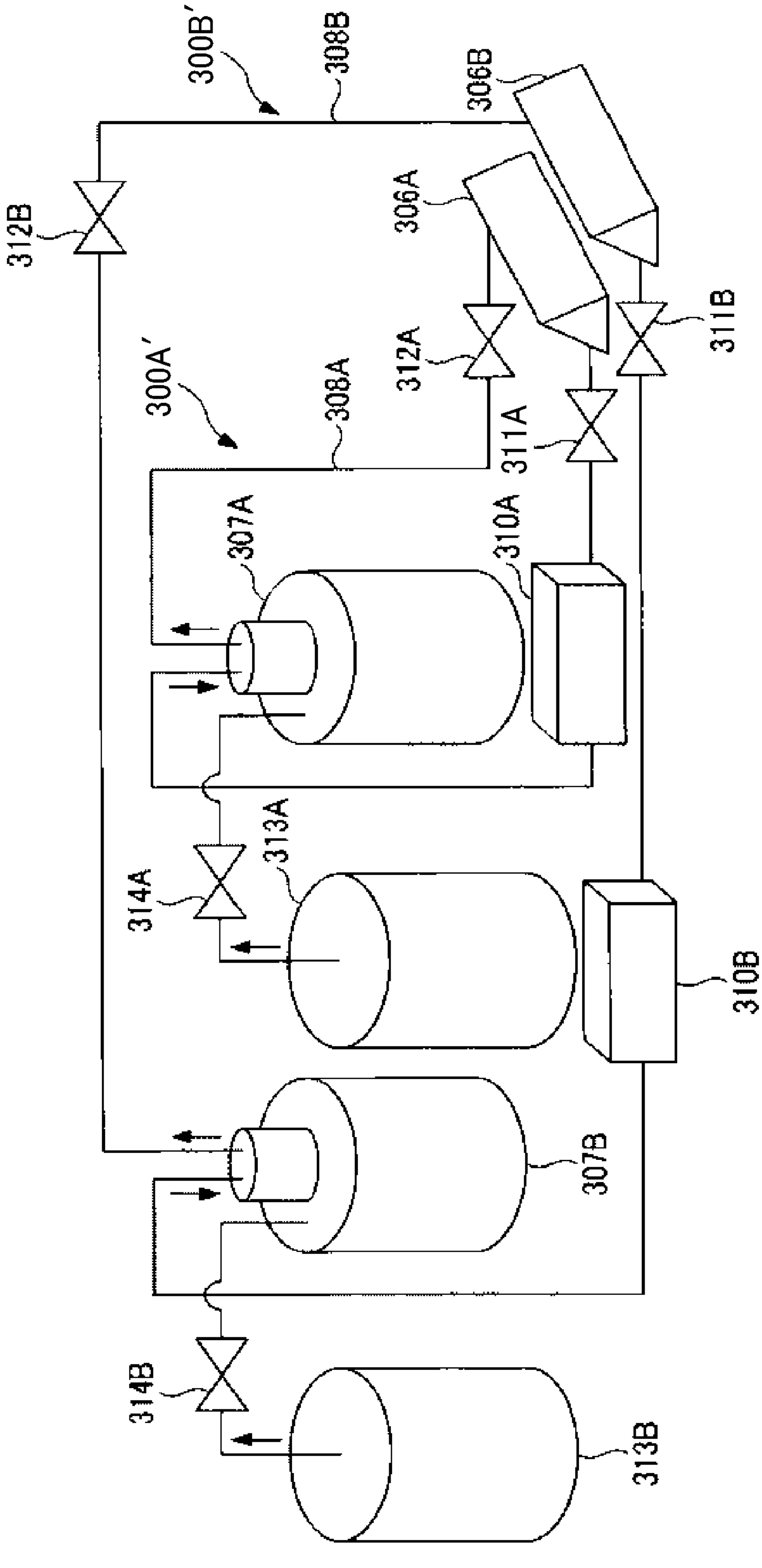
300B′
308B
306B
312B
306A
312A
311B
300A′
308A
311A
307A
310A
313A
314A
310B
307B
314B
313B

FIG. 6

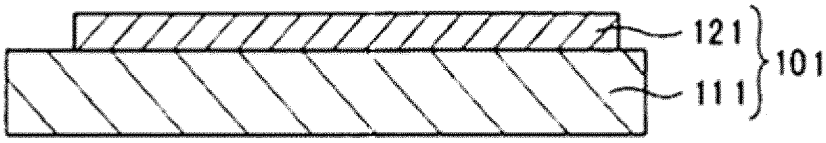


FIG. 7

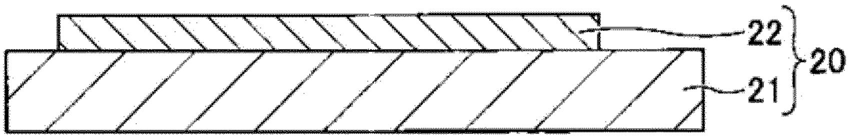

FIG. 8

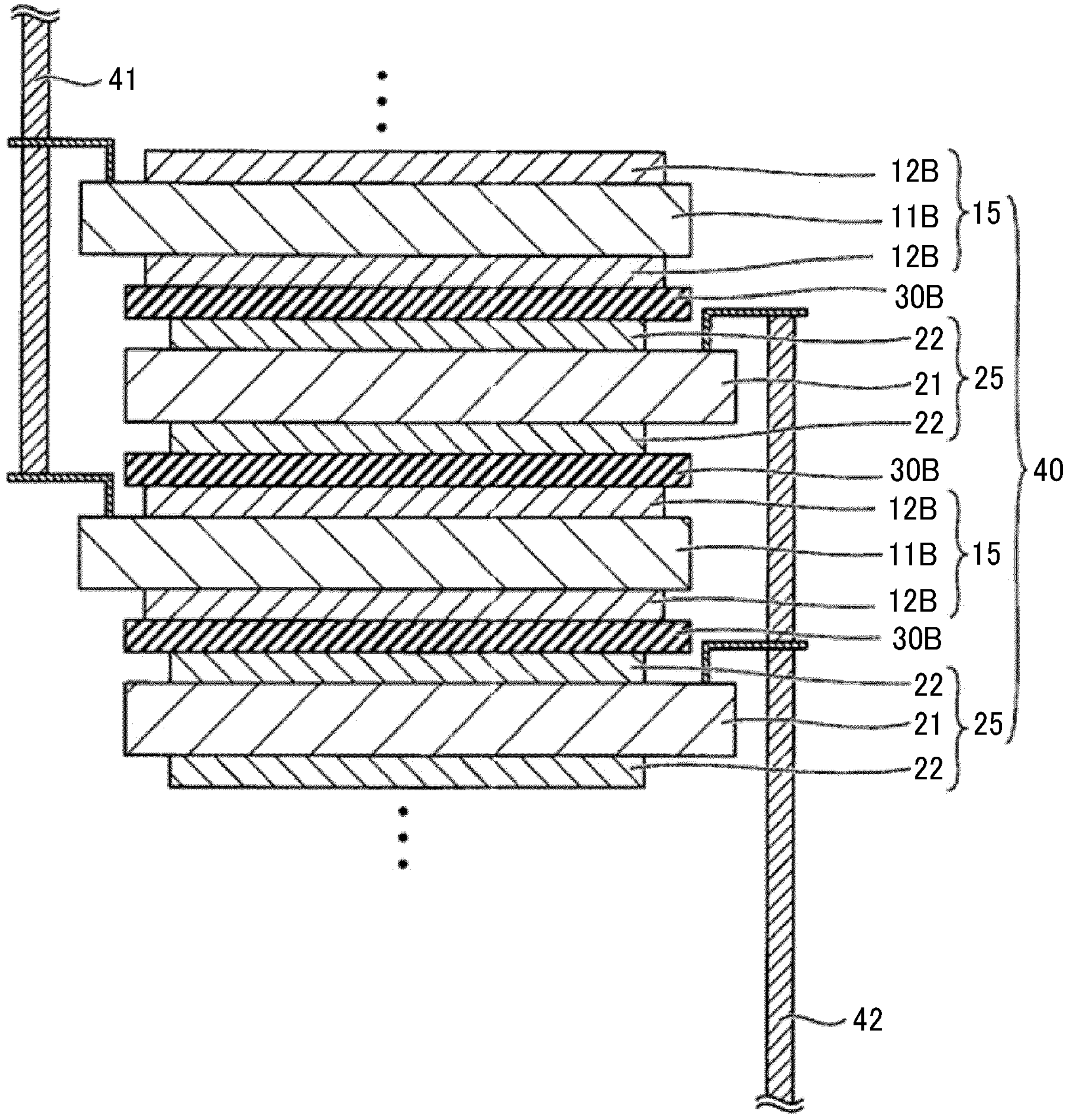
41
12B
11B
15
12B
30B
22
21
25
22
30B
40
12B
11B
15
12B
30B
22
21
25
22
42

FIG. 9

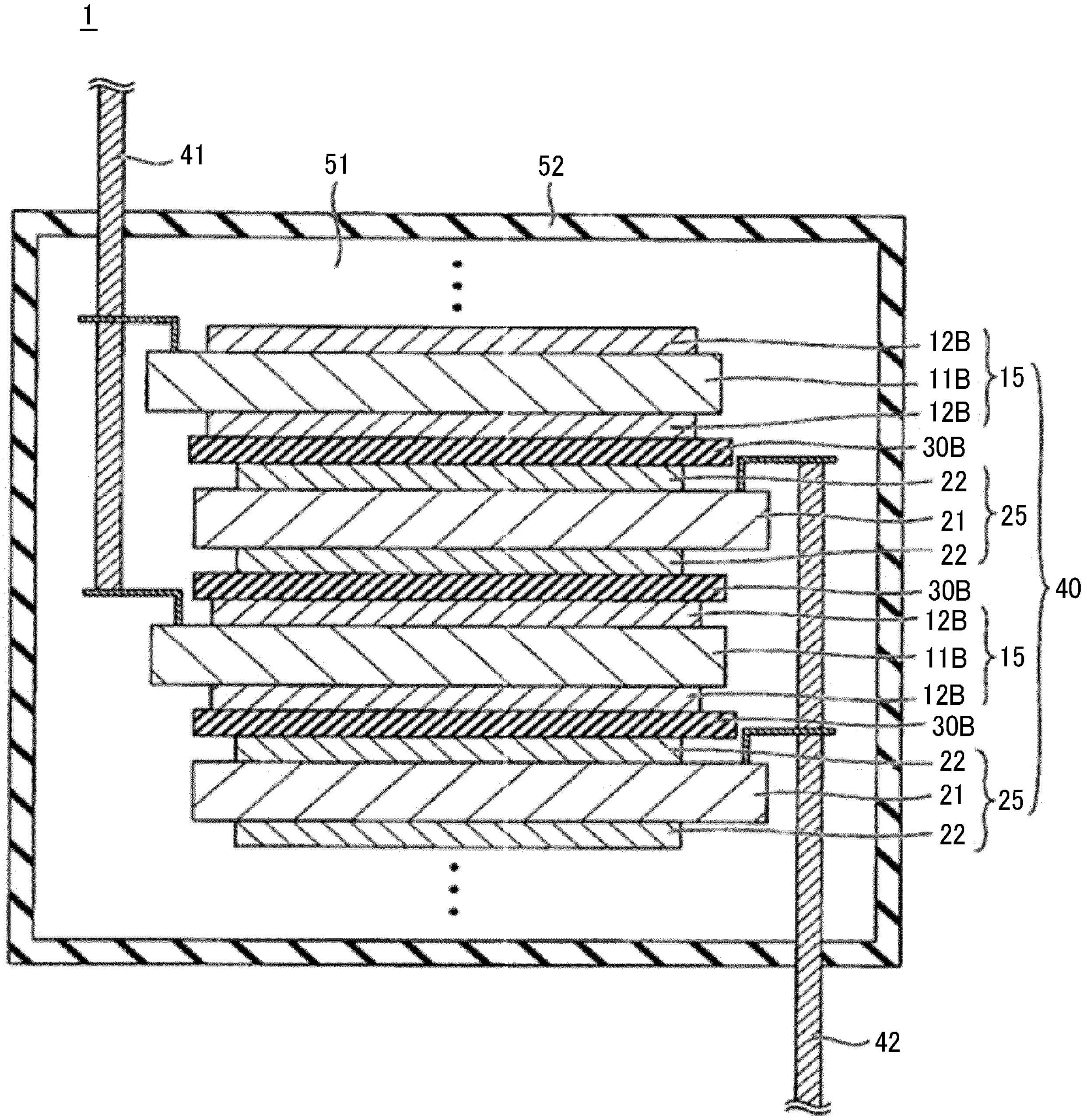
1
41
51
52
12B
11B
15
12B
30B
22
21
25
22
30B
40
12B
11B
15
12B
30B
22
21
25
22
42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009152180 A
- WO 2019044452 A
- TW I624983 B
- TW 201407794 A


### Non-patent literature cited in the description


- **KENNY B. LIPKOWITZ** ; **DONALD B. BOYDIEWS**. Reviews in Computational Chemistry, vol. 2